(19) Europäisches Patentamt
European Patent Office
Office européen des brevets

(11) EP 2 419 754 B1

(12) **FASCICULE DE BREVET EUROPEEN**

(45) Date de publication et mention de la délivrance du brevet:
**26.02.2014 Bulletin 2014/09**

(21) Numéro de dépôt: **10735031.6**

(22) Date de dépôt: **19.04.2010**

(51) Int Cl.:
***G01S 5/02*** *(2010.01)*

(86) Numéro de dépôt international:
**PCT/FR2010/050750**

(87) Numéro de publication internationale:
**WO 2010/119230 (21.10.2010 Gazette 2010/42)**

(54) **SYSTEME ET PROCEDE DE LOCALISATION DE CIBLE PAR UN RESEAU D'EMETTEURS/ RECEPTEURS**

SYSTEM UND VERFAHREN ZUR ORTUNG EINES ZIELS ANHAND EINER SENDE-/ EMPFANGSANORDNUNG

SYSTEM AND METHOD FOR LOCATING A TARGET USING A TRANSCEIVER ARRAY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.04.2009 FR 0901879**

(43) Date de publication de la demande:
**22.02.2012 Bulletin 2012/08**

(73) Titulaire: **Université de Technologie de Troyes**
**10010 Troyes Cédex (FR)**

(72) Inventeurs:
- **SNOUSSI, Hichem**
  **F-10120 St Andre Les Vergers (FR)**
- **RICHARD, Cédric**
  **F-06000 Nice (FR)**
- **HONEINE, Paul**
  **F-10000 Troyes (FR)**

(74) Mandataire: **Debay, Yves**
**Cabinet Debay**
**126 Elysée 2**
**78170 La Celle Saint Cloud (FR)**

(56) Documents cités:
- **XUANLONG NGUYEN ET AL: "A Kernel-Based Learning Approach to Ad Hoc Sensor Network Localization" ACM TRANSACTIONS ON SENSOR NETWORKS,, vol. 1, no. 1, 1 août 2005 (2005-08-01), pages 134-152, XP007910769 ISSN: 1550-4859**
- **JING TENG ET AL: "Binary Variational Filtering for Target Tracking in Sensor Networks" STATISTICAL SIGNAL PROCESSING, 2007. SSP '07. IEEE/SP 14TH WORKSH OP ON, IEEE, PI, 1 août 2007 (2007-08-01), pages 685-689, XP031134157 ISBN: 978-1-4244-1197-9**
- **JING TENG ET AL: "Prediction-Based Proactive Cluster Target Tracking Protocol for Binary Sensor Networks" SIGNAL PROCESSING AND INFORMATION TECHNOLOGY, 2007 IEEE INTERNATIONAL SYMPOSIUM ON, IEEE, PISCATAWAY, NJ, USA, 15 décembre 2007 (2007-12-15), pages 234-239, XP031234284 ISBN: 978-1-4244-1834-3**
- **PAUL HONEINE ET AL: "Localization in sensor networks - A matrix regression approach" SENSOR ARRAY AND MULTICHANNEL SIGNAL PROCESSING WORKSHOP, 2008. SAM 2008. 5TH IEEE, IEEE, PISCATAWAY, NJ, USA, 21 juillet 2008 (2008-07-21), pages 284-287, XP031312335 ISBN: 978-1-4244-2240-1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 419 754 B1

## Description

La présente invention concerne le domaine de l'électronique, notamment des réseaux d'émetteurs/récepteurs et, en particulier, le domaine de la localisation et/ou du suivi de cibles par un réseau d'émetteurs/récepteurs. La présente invention concerne plus particulièrement un système et un procédé de localisation d'une cible par un réseau d'émetteurs/récepteurs et concerne également la localisation au cours du temps, c'est-à-dire le suivi d'une cible (« tracking » selon la terminologie anglo-saxonne) par un réseau d'émetteurs/récepteurs.

Les dispositifs émetteurs/récepteurs de la présente invention, appelés ci-après « capteurs » en référence à la terminologie anglo-saxonne (« sensors ») concernent en fait tout type de dispositif émettant un signal qui décroit avec la distance et capable de mesurer le signal en retour pour permettre une localisation d'une cible (un objet ou une personne, à titre d'exemples non limitatifs) ou même d'un capteur mobile du même type. Ces capteurs pourront en fait consister en des dispositifs utilisant un signal de radio-fréquences, un signal sonore, etc. A titre d'exemple illustratif et non limitatif, ces dispositifs pourront être des téléphones mobiles ou des émetteurs/récepteurs radios, l'essentiel étant qu'ils émettent et reçoivent un signal permettant une localisation géographique grâce au fait que la puissance du signal décroît avec la distance. Dans certains cas, et notamment dans le cas des téléphones mobiles, la cible à localiser pourra être elle-même un capteur (un téléphone mobile par exemple), les autres capteurs pouvant être des dispositifs de types identiques ou différents (des émetteurs/récepteurs du réseau mobile par exemple) mais utilisant le même type de signal. Ainsi, les capteurs mettant en oeuvre l'invention comportent des moyens de réaliser une mesure, des moyens de traiter cette mesure et des moyens de diffuser l'information relative à ce traitement de la mesure, entre eux et/ou jusqu'à un système de niveau supérieur ou un humain.

Il est connu dans l'art antérieur de déterminer la localisation d'une cible à partir d'un signal reçu par un émetteur/récepteur (ou « capteur » tel que défini ici), mais cela requiert de connaître ou supposer un modèle de décroissance du signal en fonction de la distance. Un problème dans le domaine de la localisation par de tels capteurs concerne donc la connaissance ou l'hypothèse quant à ce modèle de décroissance. En effet, la plupart des méthodes de localisation et de suivi (tracking) reposent sur un modèle d'état composé de deux équations : une équation d'état reflétant la dynamique *à priori* de l'objet à localiser et une équation d'observation reliant les données observées à l'état du système qu'on cherche à estimer. Les solutions connues utilisent une fonction reliant la position de la cible à l'observation du capteur, qui modélise le fonctionnement du capteur. Cette fonction est supposée en général connue dans les méthodes de localisation et de suivi. Cependant, on peut noter qu'en pratique, la fonction ne peut pas être parfaitement connue. De plus, cette fonction, même lorsqu'elle valable, possède des paramètres qui varient en fonction de l'endroit géographique où se trouvent les capteurs. Il est connu par exemple des méthodes de localisation utilisant des capteurs radios exploitant un modèle de la puissance RSSI (Received Signal Strength Indicator, selon la terminologie anglo-saxonne) échangée entre 2 capteurs en fonction de leur distance. Des tests permettent de déterminer l'imprécision de ce modèle. De plus, une simple rotation des capteurs peut modifier complètement les paramètres de la courbe RSSI. Les solutions connues présentent donc les inconvénients de nécessiter un modèle de décroissance de la puissance en fonction de la distance et de ne pas être fiables à cause d'éventuelles variations de l'environnement des capteurs ou de variations des capteurs eux-mêmes (vieillissement ou dégradation).

Une solution alternative est proposée par Xuanlon Nguyen et al dans "A Kernel-Based Learning Approach to Ad Hoc Sensor Network Localization" qui divulgue une méthode de localisation dans un réseau ad-hoc basée sur des mesures de similarités et utilisant un Kernel (noyau) pour rendre la méthode non linéaire.

Un autre problème dans le domaine du suivi des cibles concerne l'estimation de la trajectoire de la cible et le type de cible dont il s'agit. Le suivi (tracking) d'une ou plusieurs cibles passives peut être réalisé grâce au déploiement d'un réseau de capteurs, géographiquement distribués, permettant la détection et le tracking d'une ou plusieurs cibles traversant la région surveillée. Bien que limités en puissance, en périmètre d'observation et en réserve énergétique, les capteurs doivent coopérer pour assurer une estimation efficace des positions des cibles mobiles. En général, les mesures récoltées par les capteurs sont entachées d'erreurs et les modèles dynamiques de mouvement des cibles sont non linéaires. Pour ces raisons, des méthodes d'inférence statistique approximées sont généralement employées d'une manière distribuée et coopérative. D'autre part, dans le cas d'une localisation d'un ou plusieurs capteurs non dotés d'un système de géo-localisation, la connaissance des positions des capteurs est primordiale pour de nombreuses applications des réseaux de capteurs. En particulier, le suivi de cibles par un réseau de capteurs collaboratifs, repose essentiellement sur une connaissance des positions des capteurs. Une première solution consiste à équiper tous les capteurs de systèmes de positionnement ou GPS (pour Global Positioning System, selon la terminologie anglo-saxonne). Cependant, cette méthode s'avère être trop coûteuse sur le plan énergétique en raison de la consommation excessive en énergie des GPS. Une solution alternative plus efficace consiste à n'équiper avec des GPS qu'un faible nombre de capteurs, appelés ancres. Les autres capteurs, appelés noeuds, sont localisés en échangeant des informations avec les ancres. Cette approche alternative (l'auto-localisation) s'avère être particulièrement séduisante de par sa flexibilité et fait en conséquence l'objet d'actives recherches. L'estimation des positions des capteurs dans un réseau autonome et collaboratif représente ainsi une étape préalable importante. La qualité de celle-ci est primordiale puisqu'elle conditionne les performances du système dans ses prises de décision. Ces deux problèmes de localisation de cibles passives ou de capteurs non géo-localisés sont très similaires et la solution que propose la présente invention s'applique dans les deux cas. En fait, les deux problèmes concernent la localisation d'un objet mobile (cible passive ou capteur mobile) en se basant sur un modèle *a priori* de mouvement et sur des données reflétant la proximité entre le capteur ancre et l'objet à localiser. Le cas d'une seule cible passive à localiser est équivalent au cas d'un seul capteur mobile à localiser. Les deux problèmes se distinguent légèrement dans le cas où on a plusieurs objets à localiser : les noeuds mobiles peuvent en plus mesurer des données de proximité entre eux alors que les cibles passives ne le peuvent pas.

Les problèmes de tracking d'un objet mobile (cible passive ou capteur actif) sont généralement résolus dans un cadre bayésien en se basant sur un modèle d'état. Le modèle d'état contient deux équations : une équation reflétant l'*a priori* qu'on possède sur la trajectoire de la cible et une deuxième équation reliant l'état inconnu du système aux observations dont disposent les capteurs réalisant le tracking. Le filtrage bayésien consiste à estimer la distribution *a posteriori* de l'état du système (position de la cible) sachant toutes les observations des capteurs ayant détecté la cible. Dans le cadre de la présente invention, on considère de préférence le filtrage distribué (sans hiérarchie centrale) où seulement quelques capteurs considérés pertinents sont activés pour assurer un tracking efficace.

Considérant la non linéarité des équations d'observations, le filtrage bayésien est implémenté dans les solutions connues de l'art antérieur par une méthode de Monte Carlo séquentielle (filtrage particulaire). La popularité de ce type de méthodes est essentiellement due à leur flexibilité de traiter des modèles dynamiques non-linéaires/non-gaussiens et aussi des fonctions de vraisemblances (équations d'observation) non-linéaires/non-gaussiennes. Cependant, le filtrage particulaire nécessite l'échange d'un nombre important de particules (positions simulées aléatoirement) lorsque les capteurs assurant le tracking passent la main à d'autres capteurs plus pertinents à l'instant suivant. Pour cette raison, des approximations ont été considérées pour s'accommoder aux contraintes d'énergie. Par exemple, il est connu des solutions utilisant une approximation de la distribution des particules, connue sous le nom de type « KD-tree ». Il est également connu des solutions utilisant une stratégie collaborative basée sur une approximation de type mélange de gaussiennes et implémentée par un algorithme EM (Expectation-Maximization, selon la terminologie anglo-saxonne). Contrairement à l'approximation KD-tree, l'approximation par mélange de gaussiennes ne permet pas un contrôle de la propagation de l'erreur d'approximation. L'approche KD-tree permet d'avoir un compromis entre l'erreur d'approximation et les contraintes de communications numériques. Cependant, les deux approches induisent une propagation d'erreurs d'approximations successives.

De plus le principal défaut de toutes les approches de tracking présentées ci-dessus est le fait qu'elles ne se soucient pas d'un facteur bien plus important dans les réseaux de capteurs sans fil : la modalité d'observation. Les points suivants doivent être pris en compte :

1. Pour des raisons de coût, les capteurs ne sont pas en général équipés de systèmes de capture sophistiqués.
2. Les conditions de fonctionnement réelles des capteurs ne sont pas en général connues. Il s'en suit que la fonction d'observation n'est pas connue et change avec l'environnement du capteur.
3. Les capteurs peuvent se dégrader avec le temps (usure normale ou incidents).

A titre d'exemple, le modèle de proximité qui est très utilisé dans la littérature est celui du RSSI (Received Signal Strength Indicator). Le RSSI est basé sur un modèle paramétrique dont les paramètres doivent être appris selon l'environnement du capteur. Les performances du tracking et de la localisation sont très sensibles à la pertinence de ce modèle et à ses paramètres fixés. En fait, le RSSI représente la forme de la vraisemblance qui est utilisée dans le filtrage bayésien. La déviation de cette fonction de vraisemblance cause de sévères dégradations des performances du tracking. Une manière d'éviter ce problème est l'utilisation des capteurs binaires basés sur la comparaison du RSSI par rapport à un seuil fixé pour décider si la cible est dans le voisinage ou non du capteur. Le principal défaut de cette approche est la perte d'une quantité importante de l'information en seuillant le RSSI (hard décision).

Dans ce contexte, il est donc intéressant de proposer une solution permettant de pallier au moins certains des inconvénients des méthodes et systèmes de l'art antérieur, qui nécessitent un modèle de fonctionnement des capteurs et/ou nécessitent des calculs d'une pluralité de particules pour le filtrage et/ou induisent pas des propagations d'erreurs d'approximation et/ou ne sont pas robustes aux évolutions des capteurs ou de leur environnement.

La présente invention a pour but de proposer un procédé de localisation de cible par un réseau de capteurs permettant de pallier au moins certains inconvénients de l'art antérieur.

Ce but est atteint par un procédé de localisation et/ou de suivi d'au moins une cible par un réseau d'émetteurs/récepteurs, dits capteurs, dont au moins une partie a une localisation géographique connue, comportant chacun des moyens de traitement de données mettant en oeuvre au moins un algorithme pour la localisation et/ou le suivi de cible(s), des moyens d'émission/réception d'un signal décroissant avec la distance et des moyens de communication, le réseau de capteurs couvrant au moins une zone géographique, dite région, caractérisé en ce qu'il comporte, pour chaque instant, une itération des étapes suivantes:

- sélection d'un capteur, dit leader, pour chaque cible, grâce à au moins un algorithme de sélection de leader, pour la mise en oeuvre des étapes suivantes,
- échange de données, dites de similarité, entre le capteur leader et au moins une partie des capteurs du réseau, ces données étant représentatives des mesures de puissance du signal entre les capteurs et la cible et entre les capteurs eux-mêmes,
- détermination d'une distribution de probabilité de la position de la cible dans la région, par le capteur leader, grâce à au moins un algorithme de régression matricielle probabiliste sur la base des données de similarité.

Selon une autre particularité, le procédé comporte, lorsque la (ou les) cible(s) est (ou sont) une (ou des) cible (s) passive(s) par rapport au signal des capteurs, une étape de détection d'au moins une cible présente dans la région, par au moins un des capteurs à un instant initial, et comporte, à chaque instant, une itération d'une étape de sélection d'un ensemble de n capteurs, grâce à au moins un algorithme d'activation, préalablement à l'étape de sélection du capteur leader, ce dernier étant alors sélectionné au sein de cet ensemble grâce à l'algorithme de sélection.

Selon une autre particularité, lorsque la (ou les) cible(s) est (ou sont) un (ou des) capteur(s) mobile(s), il(s) est (ou sont) sélectionné(s), grâce à l'algorithme de sélection, comme capteur(s) leader(s) et sélectionne, grâce à au moins un algorithme d'activation, un ensemble de n capteurs voisins pour estimer la position de la cible dans la région.

Selon une autre particularité, le procédé comporte, à chaque instant, une itération d'une étape de suivi de la cible par le capteur leader, par mise à jour de la position de la cible grâce à au moins un algorithme de filtrage variationnel basé sur un filtre variationnel fournissant une estimation de la position de la cible.

Selon une autre particularité, le filtre variationnel utilisé au cours de l'étape de mise à jour repose sur une utilisation d'une fonction de vraisemblance de la position de la cible basée sur la distribution de probabilité de la position de la cible, déterminée au cours de l'étape de détermination, et sur une utilisation d'un modèle, dit de transition, reposant notamment sur une corrélation temporelle d'une trajectoire supposée de la cible d'un instant à l'autre.

Selon une autre particularité, lorsqu'il existe plusieurs cibles et qu'elles sont passives, le capteur leader de chacune des cibles met en oeuvre, lors de l'étape de mise à jour, une étape d'association probabiliste des données représentatives de la position de la cible et de sa trajectoire, issues du filtre variationnel utilisé par ce capteur leader, pour déterminer à quelle cible correspond un ensemble de données.

Selon une autre particularité, l'étape de suivi comporte, à chaque instant, une itération d'une étape de prédiction de la (ou des) position(s) de la (ou des) cible(s) à l'instant suivant.

Selon une autre particularité, l'étape de prédiction de la (ou des) position(s) de la (ou des) cible(s) à l'instant suivant s'accompagne, lorsque la (ou les) cible(s) est (ou sont) une (ou des) cible(s) passive(s) par rapport au signal des capteurs, d'une réitération de l'étape de sélection d'un ensemble de n capteurs, grâce à au moins un algorithme d'activation et de l'étape de sélection d'un capteur leader grâce à l'algorithme de sélection.

Selon une autre particularité, l'étape de prédiction de la (ou des) position(s) de la (ou des) cible(s) à l'instant suivant est suivie, lorsque la (ou les) cible(s) est (ou sont) une (ou des) cible(s) passive(s) par rapport au signal des capteurs, d'une étape d'envoi, par le capteur leader de l'instant vers le capteur leader de l'instant suivant, de données représentatives de statistiques suffisantes pour la mise à jour du filtre variationnel à l'instant suivant et d'une réitération du procédé.

Selon une autre particularité, l'étape de prédiction de la (ou des) position(s) de la (ou des) cible(s) à l'instant suivant est suivie, lorsque la (ou les) cible(s) est (ou sont) un (ou des) capteur(s) mobile(s), d'une étape d'effacement des données traitées par les moyens de traitement du capteur leader, à l'exception des données représentatives de statistiques suffisantes pour la mise à jour du filtre variationnel de ce capteur leader à l'instant suivant, puis d'une réitération du procédé.

Selon une autre particularité, les données de similarité sont considérées comme des produits scalaires euclidien entre les capteurs et la cible et entre les capteurs eux-mêmes, dans un espace de Hilbert à noyau reproduisant.

Selon une autre particularité, la distribution de probabilité de la position de la cible dans la région est une gaussienne.

Selon une autre particularité, les données représentatives de statistiques suffisantes sont représentatives d'une moyenne et une covariance de la position estimée de la cible.

La présente invention a également pour but de proposer un système de localisation de cible par un réseau de capteurs permettant de pallier au moins certains inconvénients de l'art antérieur.

Ce but est atteint par un système de localisation et/ou de suivi d'au moins une cible par un réseau d'émetteurs/récepteurs, dits capteurs, dont au moins une partie a une localisation géographique connue, comportant chacun des moyens de traitement de données, des moyens d'émission/réception d'un signal décroissant avec la distance et des moyens de communication, le réseau de capteurs couvrant au moins une zone géographique, dite région, caractérisé en ce que les moyens de traitement de données implémentent au moins un algorithme pour la localisation et/ou le suivi de cible(s) par la mise en oeuvre du procédé selon l'invention.

Selon une autre particularité, les moyens d'émission/réception d'un signal décroissant avec la distance et les moyens de communication sont des mêmes moyens permettant à la fois les mesures et les communications pour la mise en oeuvre du procédé.

D'autres particularités et avantages de la présente invention apparaîtront plus clairement à la lecture de la description ci-après, faite en référence aux dessins annexés, dans lesquels :

- la figure 1 représente un mode de réalisation du système de localisation selon l'invention suivant une cible passive au cours du temps, avec un grossissement d'un capteur du réseau,
- la figure 2 représente un mode de réalisation du procédé de localisation selon l'invention, mis en oeuvre dans le cas de cibles passives,
- la figure 3 représente un mode de réalisation du procédé de localisation selon l'invention, mis en oeuvre dans le cas de capteur(s) mobile(s) cible(s),
- les figures 4A et 4B représentent un mode de réalisation du système de localisation selon l'invention, avec les échanges de données, respectivement dans le cas de 2 cibles passives et dans le cas de 2 capteurs mobiles cibles.

La présente invention concerne un système et un procédé de localisation et/ou de suivi de cibles par un réseau de capteurs, qui ne nécessite pas de modèle de fonctionnement des capteurs (ou « modèle d'observation »).

Les dispositifs émetteurs/récepteurs de la présente invention, appelés ci-après « capteurs » en référence à la terminologie anglo-saxonne (« sensors ») concernent en fait tout type de dispositif émettant un signal qui décroit avec la distance. Ces capteurs sont capables de mesurer le signal en retour pour permettre une localisation d'une cible (un objet ou une personne, à titre d'exemples non limitatifs) ou même d'un capteur mobile du même type. La (ou les) cible (s) à localiser pourra (ou pourront) être passive(s) ou être un (ou des) capteur(s) mobile(s). Une cible est dite passive par rapport au signal des capteurs lorsqu'elle n'émet pas ce type de signal. Sa localisation est alors permise uniquement par le retour du signal qui a rencontré la cible vers les capteurs. Dans le cas d'une cible passive, c'est simplement le signal en retour reçu par les émetteurs/récepteurs qui permettra la localisation de la cible. Dans le cas d'un capteur mobile, qui peut être pris pour cible, il capte (reçoit) et envoi (émet) un signal du même type que les capteurs du réseau de localisation et joue alors également le rôle d'un capteur du réseau, mais de façon privilégiée, comme détaillé ci-après. Les capteurs perçoivent le signal émis par les autres capteurs (notamment la puissance du signal) et il est possible de tirer avantage de cette particularité, comme expliqué ci-après.

Les capteurs pourront en fait consister en des dispositifs utilisant un signal de radio-fréquences, un signal sonore, etc. A titre d'exemple illustratif et non limitatif, ces dispositifs pourront être des téléphones mobiles ou des émetteurs/récepteurs radios, l'essentiel étant qu'ils émettent et reçoivent un signal permettant une localisation géographique grâce au fait que la puissance du signal décroît avec la distance. Dans certains cas, et notamment dans le cas des téléphones mobiles, la cible à localiser pourra être elle-même un capteur (un téléphone mobile par exemple), les autres capteurs pouvant être des dispositifs de types identiques ou différents (des émetteurs/récepteurs du réseau mobile par exemple) mais utilisant le même type de signal. La présente invention utilise un réseau de capteurs reliés entre eux grâce à des moyens de communication. Ces moyens de communication pourront, selon les cas, émettre un signal pour la communication qui peut être de type différent ou identique du type de signal utilisé pour la localisation (par exemple, la localisation d'un téléphone mobile par des émetteurs/récepteurs du réseau pourra être faite par l'utilisation des signaux de radio-communication utilisés pour les communications mobiles et c'est donc le même signal qui permet la localisation et les communications entre émetteurs/récepteurs du réseau). Ainsi, les moyens d'émission/réception d'un signal décroissant avec la distance et les moyens de communication pourront, dans certains modes de réalisation, être des mêmes moyens permettant à la fois les mesures et les communications pour la mise en oeuvre de l'invention.

La présente invention est mise en oeuvre par un réseau de « capteurs » que l'on considérera ci-après comme comportant chacun des moyens de traitement de données pour mettre en ouvre des algorithmes relatifs aux calculs décrits dans la présente demande (avec éventuellement des moyens de mémorisation stockant ces algorithmes), des moyens d'émission/réception d'un signal décroissant avec la distance et éventuellement des moyens de communication (s'il ne peuvent pas communiquer via les moyens d'émission/réception du signal). Les moyens de communication pourront être des moyens filaire ou sans fil. De préférence, l'invention sera mise en oeuvre dans un réseau de capteurs autonomes (i.e., ne nécessitant pas de système de niveau supérieur) qui implémentent l'invention de façon collaborative. Les moyens de traitement pourront être reconfigurables en fonction de l'évolution de la population de capteurs. Ces modes distribués présentent l'avantage d'être particulièrement robustes aux attaques extérieures et à la défaillance des capteurs puisqu'il est prévu que la perte de composants ne compromette pas l'efficacité du réseau dans son ensemble. La formulation des problèmes de décision et des algorithmes de résolution se trouve totalement modifiée puisque chaque « noeud » du réseau, composé d'un capteur intelligent miniaturisé (ayant éventuellement une capacité énergétique limitée), se voit confié la mission de réaliser des mesures et de prendre des décisions locales partielles. Ces dernières sont affinées de proche en proche par les capteurs qui l'entourent. Au moins une partie des capteurs du réseau ont une localisation géographique qui est connue. Les capteurs de position connue pourront, dans la description ci-après, être désignés par le terme « ancres » largement utilisé dans le domaine, qu'ils soient en fait mobiles ou non. Les capteurs de position non connue pourront, dans la description ci-après, être désignés par le terme « noeuds » largement utilisé dans le domaine.

La présente invention concerne donc un système de localisation et/ou de suivi d'au moins une cible (X) par un réseau d'émetteurs/récepteurs, dits capteurs (S). Le système comporte donc une pluralité de capteurs dont au moins une partie a une localisation géographique connue. Chacun des capteurs (S) comporte des moyens (S1) de traitement de données, des moyens (S2) d'émission/réception d'un signal décroissant avec la distance et des moyens (S21) de communication. Ce réseau de capteurs (S) couvre au moins une zone géographique, dite région (Z). Le système est caractérisé en ce que les moyens (S1) de traitement de données implémentent au moins un algorithme (AA, AS, AR, AF) pour la localisation et/ou le suivi de cible(s) par la mise en oeuvre de l'invention comme détaillé ci-après. Ces algorithmes sont détaillés en référence au procédé selon l'invention et l'homme de métier comprendra à la lecture de la présente demande comment implémenter ces algorithmes dans les capteurs. Dans certains modes de réalisation, les moyens (S2) d'émission/réception d'un signal décroissant avec la distance et les moyens (S21) de communication sont des mêmes moyens permettant à la fois les mesures et les communications pour la mise en oeuvre de l'invention.

La présente invention concerne également un procédé de localisation et/ou de suivi d'au moins une cible (X) par un réseau d'émetteurs/récepteurs, dits capteurs (S), dont au moins une partie a une localisation géographique connue. Chacun des capteurs comporte des moyens (S1) de traitement de données mettant en oeuvre au moins un algorithme (AA, AS, AR, AF) pour la localisation de cible(s), des moyens (S2) d'émission/réception d'un signal décroissant avec la distance et éventuellement des moyens (S21) de communication. Le réseau de capteurs (S) couvre au moins une zone géographique, dite région (Z). Le procédé est caractérisé en ce qu'il comporte, pour chaque instant (t), une itération des étapes suivantes :

- sélection (52) d'un capteur, dit leader (SL), pour chaque cible (X), grâce à au moins un algorithme (AS) de sélection de leader, pour la mise en oeuvre des étapes suivantes,
- échange (53) de données, dites de similarité (DS), entre au moins une partie des capteurs (S) et le capteur leader (SL), ces données étant représentatives des mesures de puissance du signal entre les capteurs (S) et la cible (X) et entre les capteur (S) eux-mêmes,
- détermination (54) d'une distribution (DP) de probabilité de la position de la cible (X) dans la région (Z), par le capteur leader (SL), grâce à au moins un algorithme (AR) de régression matricielle probabiliste sur la base des données de similarité (DS).

Lors de l'étape d'échange (53) des données de similarité, les données pourront être représentatives des mesures de puissance du signal entre les capteurs (S) et la cible (X) et entre les capteurs eux-mêmes, l'essentiel étant que ce sont les mesures entre les capteurs eux-mêmes qui permettent de s'affranchir d'un modèle de fonctionnement des capteurs (données de puissance décroissant en fonction de la distance). Le terme de « similarité » est utilisé ici pour désigner le fait que lorsque deux objets se rapprochent entre eux, le signal devient plus important. Il y a donc une similarité d'évolution du signal. Mathématiquement, les données (DS) de similarité peuvent être considérées comme des produits scalaires des deux objets, c'est-à-dire des produits scalaires euclidiens entre les capteurs et la cible et entre les capteurs eux-mêmes dans un espace de Hilbert à noyau reproduisant.

La figure 1 représente un mode de réalisation du système selon l'invention couvrant une région (Z), avec un grossissement d'un capteur (S) du réseau détaillant les moyens qu'il comporte, dans le cas d'une cible passive de trajectoire (T). Cette figure illustre les sélections d'ensembles ($I_{(t-1)}$ et $I_{(t)}$ respectivement) de capteurs d'un instant précédent (t-1) à l'instant (t) (ou un instant donné à l'instant suivant) et le changement de capteur leader (SL) entre les 2 instants, avec la transmission de données (SS) représentatives de statistiques suffisantes entre le capteur leader ($SL_{(t-1)}$) à un instant précédent (t-1) et le capteur leader ($SL_{(t)}$) à l'instant (t).

L'invention est mise en oeuvre de façon différente selon que la cible est une cible passive ou un capteur mobile, comme détaillé ci-après. Dans les 2 cas, l'invention utilise au moins un capteur sélectionné comme leader et coopérant avec au moins une partie des autres capteurs du réseau. Par exemple, le procédé comporte une étape de sélection (51) d'un ensemble (I) de n capteurs (S) qui vont mettre en oeuvre certaines étapes du procédé. Lorsque la (ou les) cible(s) (X) est (ou sont) un (ou des) capteur(s) (S) mobile(s), il(s) est (ou sont) sélectionné(s), grâce à l'algorithme (AS) de sélection, comme capteur(s) leader(s) (SL) au cours de l'étape (52) de sélection de capteur(s) leader(s) (SL). Le capteur mobile se sélectionne lui-même comme capteur leader pour estimer sa propre position. Le procédé démarrera alors, par exemple, dès lors que ce capteur mobile détecte le signal d'un capteur ancre (de position connue) dans son environnement. L'étape de sélection (51) de l'ensemble (I) est alors mise en oeuvre par ce capteur leader mobile qui sélectionne, grâce à au moins un algorithme (AA) d'activation, un ensemble (I) de n capteurs (S) voisins pour estimer la position de la cible (X) dans la région (Z), c'est-à-dire sa propre position. Cette sélection pourra être définie dans l'algorithme d'activation (AA) comme une sélection de tous les capteurs dont il capte le signal ou des capteurs dont le signal dépasse un seuil ou tout type d'algorithme de ce type qui permet une bonne sélectivité et une bonne spécificité de la sélection (51) de l'ensemble (I).

En revanche, lorsque la (ou les) cible(s) (X) est (ou sont) une (ou des) cible(s) passive(s) par rapport au signal des capteurs (S), le procédé comporte une étape de détection (50) d'au moins une cible (X) présente dans la région (Z), par au moins un des capteurs (S) à un instant initial. Le procédé comporte alors, à chaque instant (t), une itération d'une étape de sélection (51) d'un ensemble (1) de n capteurs (S), grâce à au moins un algorithme (AA) d'activation, préalablement à l'étape de sélection (52) du capteur leader (SL), ce dernier étant alors sélectionné au sein de cet ensemble (1) grâce à l'algorithme (AS) de sélection. Dans ce cas, l'algorithme d'activation (AA) pourra par exemple, dans le cas d'un réseau dit « clusterisé » où une « tête » du cluster fait le traitement et répartit l'information sur les capteurs autour, définir un protocole d'activation selon lequel la prédiction de la position de la cible à partir du filtre variationnel détaillé ci-après permet de choisir le cluster le plus proche. Dans le cas d'un réseau non clusterisé, l'algorithme d'activation (AA) pourra par exemple définir un protocole d'activation selon lequel la prédiction de la position de la cible à partir du filtre variationnel détaillé ci-après permet de choisir les capteurs dont le barycentre est le plus proche de la position prédite. Dans tous les cas, l'algorithme pourra également définir le nombre n de capteurs (S) que doit comporter l'ensemble (I).

**Construction de la vraisemblance par régression matricielle**

Les étapes d'échanges (53) de données de similarité et de détermination (54) permettent s'affranchir de la nécessité d'une modèle du fonctionnement des capteurs et correspond à une construction locale d'un modèle de vraisemblance linéaire et gaussien en exploitant les données mesurées entre des capteurs ayant des positions connues, grâce à un algorithme (AR) de régression matricielle probabiliste sur la base des données de similarité (DS). Afin d'établir un lien avec le problème de régression matricielle, les données observées sont considérées comme des données de similarité entre le capteur et la cible. L'unique hypothèse de départ sur la nature des observations est le fait que les données de similarité mesurées entre les capteurs et les cibles ou entre les capteurs eux-mêmes est une fonction strictement décroissante de la distance. Aucun modèle n'est supposé connu.

A chaque instant *t*, on suppose qu'un ensemble (I) de n capteurs $\{s_1^{(t)},..., s_n^{(t)}\}$ sont sélectionnés pour estimer la position $x_t$ de la cible (X). On suppose de plus que les données de similarité mesurées entre les capteurs et la cible et entre les capteurs eux-mêmes sont disponibles au niveau du capteur leader (SL) (en particulier, un capteur sélectionné pour la mise à jour du processus de filtrage décrit ci-après). Les données de similarité inter-capteurs jouent le rôle de données d'apprentissage qui vont être exploitées sans connaissance du modèle qui les lie aux distances. Les données de similarité sont considérées comme des produits scalaires dans l'espace de Hilbert à noyau reproduisant (RKHS). En d'autres termes, la mesure de similarité entre un capteur $s_i^{(t)}$ et un autre capteur $s_j^{(t)}$ est considérée comme le produit scalaire euclidien entre leurs représentants $\phi(s_i^{(t)})$ et $\phi(s_j^{(t)})$ dans le RKHS : $\kappa(s_i^{(t)}, s_j^{(t)}) = <\phi(s_i^{(t)}), \phi(s_j^{(t)})>$

Selon cette formulation, la matrice (N x N)-matrix (avec N = n + 1) des données de similarité correspond à la matrice noyau K (mesurée et donc parfaitement connue) dont les éléments sont définis comme suit :

$$\begin{cases} (K)_{i,j} = \mathcal{K}(s_i^{(t)}, s_j^{(t)}) & 1 \leq i \neq j \leq n, \\ (K)_{i,n+1} = \mathcal{K}(s_i^{(t)}, x_t) & 1 \leq i \leq n, \\ (K)_{l,l} = c = const. & 1 \leq l \leq n+1. \end{cases}$$

Comme la position de la cible est inconnue, la matrice G (N x N) formée par les produits scalaires euclidiens de l'ensemble $\{s_1^{(t)}, s_2^{(t)}, ... , s_n^{(t)}, x_t\}$ possède des entrées inconnues correspondant aux produits scalaires entre les capteurs de positions connues et la cible de position inconnue. L'objectif de la complétion matricielle consiste à estimer les entrées manquantes de la matrice G en exploitant une forme de corrélation avec la matrice complète K. En partageant la matrice G en 4 blocs $G_{tt}$, $G_{tp}$, $G_{pt}$ and $G_{pp}$ correspondant respectivement aux produits scalaires capteur/capteur, capteur/cible, cible/capteur et cible/cible, le problème de complétion matricielle peut être illustré par le diagramme suivant :

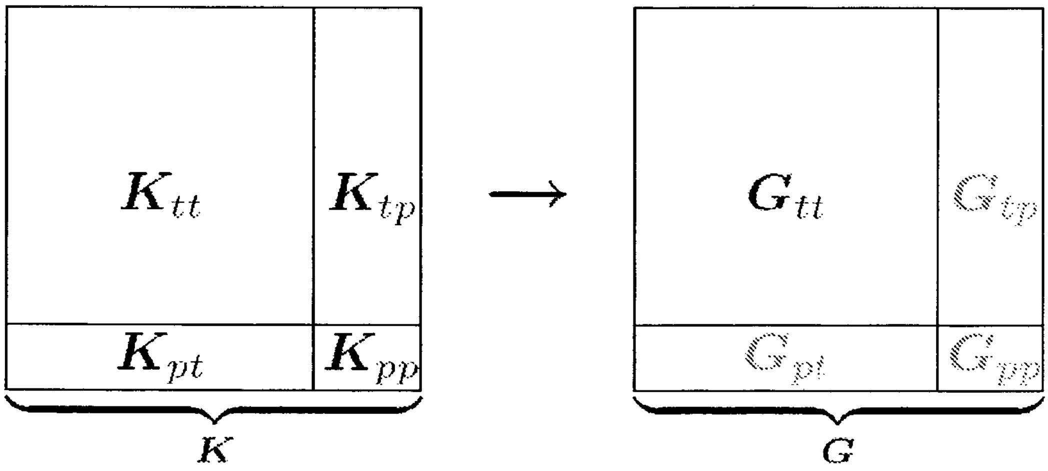


où l'objectif est la prédiction des blocs inconnus (en gris) $G_{tP}$, $G_{pt}$ et $G_{pp}$ en estimant une relation entre les blocs (connus) $K_{tt}$ et $G_{tt.}$ Notons que dans notre problème de localisation (suivi ou tracking), seul le bloc $G_{tP}$ nous intéresse puisqu'il contient les produits scalaires entre les capteurs et la cible :

$$G_{tp} = [(s_1^{(t)})^T x_t, \ldots, (s_i^{(t)})^T x_t, \ldots, (s_n^{(t)})^T x_t]^T,$$

Il est utile de noter que la matrice $G_{tp}$ est linéaire par rapport à la position $x_t$ inconnue de la cible (X). Cette propriété sera exploitée pour une implémentation efficace du filtre variationnel dans la description ci-après. Afin de résoudre le problème de complétion matricielle, l'algorithme de régression (AR) utilise une méthode de régression matricielle basée essentiellement sur la formulation du problème dans l'espace RKHS. Dans la présente invention, au lieu de prédire le bloc manquant $G_{tP}$, on propose de calculer une distribution (DP) de probabilité de $G_{tp}$. On peut montrer que la relation entre les blocs de la matrice complète K et les blocs de la matrice incomplète G s'écrit comme suit :

$$G_{tt} = K_{tt} A K_{tt} + \Psi_{tt}$$

$$G_{tp} = K_{tt} A K_{tp} + \Psi_{tp}$$

$$G_{pp} = K_{pt} A K_{tp} + \Psi_{pp}$$

où A est une matrice inconnue et $\Psi = (\in_{i,j})_{i,j=1..N}$ est une matrice (N x N) de variables gaussiennes (i.i.d) avec la même variance $\sigma_{ij}^2 = \sigma^2$ .

Selon la formulation statistique ci-dessus du problème de régression, on peut montrer que, connaissant les matrices $G_{tt,}$ $K_{tt}$ et $K_{tp}$, la matrice $G_{tp}$ est aléatoire gaussienne dont la moyenne et la covariance sont données par les expressions suivantes :

$$\begin{cases} \mu_g = G_{tt} K_{tt}^{-1} K_{tp} \\ \Sigma_g = \sigma^2 (K_{pt} K_{tt}^{-2} K_{tp} + 1) I_n \end{cases}$$

où $I_n$ la matrice (n x n) identité.

La distribution gaussienne du vecteur $G_{tp}$ dans la présente invention est particulièrement avantageuse car elle permet son utilisation comme fonction de vraisemblance dans le filtre variationnel décrit ci-après, en en facilitant (accélérant) le calcul.

En fait, en notant $S = [s_1^{(t)}, s_2^{(t)}, \ldots, s_n^{(t)}]^T$ la matrice (n x 2) des positions des capteurs sélectionnés à l'instant t, l'aspect gaussien de $G_{tp}$ peut être exprimé par la relation suivante :

$$G_{tp} = Sx_t = G_{tt}K_{tt}^{-1}K_{tp} + \gamma_t$$

où $\gamma_t$ est un bruit gaussien de moyenne nulle et de matrice de covariance diagonale $\Sigma_g$ définie par les expressions de la moyenne et la covariance de la matrice $G_{tp}$ aléatoire gaussienne précédentes. L'expression de l'aspect gaussien de $G_{tP}$ ci-dessus peut être considérée comme le modèle statistique résultant liant les données observées et les positions des objets à localiser (et suivre) (cibles passives ou capteurs mobiles). Ce modèle jouera le rôle de la fonction de vraisemblance lorsqu'on va implémenter le filtrage bayésien (variationnel) dans l'étape de suivi (55) décrit ci-après. La quantité $G_{tt}K_{tt}^{-1}K_{tp}$ dans le terme à droite de l'équation ci-dessus peut être interprétée comme la statistique suffisante résumant toutes les données disponibles à l'instant courant *t*.

On comprend donc que l'algorithme de régression matricielle (AR) permet, par exemple via les calculs décrits ici, d'obtenir une distribution (DP) de probabilité de la cible (X). En particulier, lorsque l'algorithme de régression permet la mise en oeuvre des calculs détaillés ici, on comprend que dans ces modes de réalisation de l'invention, la distribution (DP) de probabilité de la position de la cible (X) dans la région (Z) est une gaussienne. On rappellera que cette expression gaussienne est particulièrement avantageuse pour son utilisation dans le filtre variationnel ci-après.

Une fois le calcul de la distribution (DP) de probabilité de la cible (X) permise par cette régression matricielle, il est possible d'effectuer un suivi d'une cible mobile en implémentant au moins un algorithme de suivi au sein du réseau de capteurs (dans les moyens (S1) de traitement), pour réaliser un filtrage variationnel.

On parle ici de filtrage variationnel car le filtrage bayésien a toujours pour but de calculer la probabilité d'une inconnue (ici la position de la cible) à partir de la connaissance de données. Ici, l'algorithme (AF) de filtrage variationnel repose sur un calcul variationnel dans lequel on dérive par une fonction car on dispose d'un critère dépendant d'une fonction (et non d'un vecteur) et on cherche la fonction qui permet de minimiser le critère.

Suite à la localisation de la cible grâce à la régression ci-dessus, pour permettre le suivi de la cible si elle est mobile, le procédé pourra donc comporter, dans certains modes de réalisation, une itération, à chaque instant (t), d'une étape de suivi (55) de la cible (X) par le capteur leader (SL), par mise à jour (551) de la position de la cible (X) grâce à au moins un algorithme (AF) de filtrage variationnel basé sur un filtre variationnel fournissant une estimation de la position de la cible (X).

Dans certains modes de réalisation de l'invention, le filtre variationnel utilisé au cours de l'étape de mise à jour (551) repose sur une utilisation d'une fonction de vraisemblance de la position de la cible (X) basée sur la distribution (DP) de probabilité de la position de la cible (X), déterminée au cours de l'étape de détermination (54), et sur une utilisation d'un modèle (MT), dit de transition, reposant notamment sur une corrélation temporelle d'une trajectoire (T) supposée de la cible (X) d'un instant à l'autre. De plus, l'étape de suivi (55) comporte, à chaque instant (t), une itération d'une étape de prédiction (552) de la (ou des) position(s) de la (ou des) cible(s) à l'instant suivant.

Dans l'algorithme de filtrage (AF) variationnel, la fonction de vraisemblance sera basée sur le modèle linéaire gaussien $G_{tp}$ obtenu par la méthode de régression matricielle décrite précédemment. La dynamique de l'état du système $X_t$ est décrite par un modèle de mélange continu de gaussiennes (« mean-scale mixture » selon la terminologie anglo-saxonne).

Selon ce modèle, l'état caché $x_t \in \mathbb{R}^{n_x}$ suit une distribution gaussienne de moyenne aléatoire $\mu_t$ et de matrice de précision aléatoire $\lambda_t$. La moyenne suit une marche aléatoire gaussienne, traduisant la corrélation temporelle de la trajectoire de l'état caché du système. La matrice de précision suit une loi de Wishart :

$$\begin{cases} \mu_t \sim \mathcal{N}(\mu_t \mid \mu_{t-1}, \bar{\lambda}) \\ \lambda_t \sim \mathcal{W}_{\bar{n}}(\lambda_t \mid \bar{S}) \\ x_t \sim \mathcal{N}(x_t \mid \mu_t, \lambda_t) \end{cases}$$

où les hyperparamètres $\overline{\lambda}, \overline{n}$ et $\overline{S}$ sont respectivement la matrice de précision de la marche aléatoire, le degré de liberté et la matrice de précision de la distribution de Wishart.

On notera que l'expression ci-dessus correspond à un modèle (MT), dit de transition, donnant un a priori sur la trajectoire de la cible. De plus, la fonction de vraisemblance de la position de la cible (X) est basée sur la distribution (DP) de probabilité de la position de la cible (X), déterminée au cours de l'étape de détermination (54), et le filtre permet donc de fusionner la fonction de vraisemblance avec le modèle de transition.

Il convient de noter que l'aspect aléatoire de la moyenne et de la précision induit une distribution *a priori* marginale dont le comportement des queues peut être ajusté d'une manière simple selon les valeurs des hyperparamètres. De plus, une distribution à queues lourdes permet un suivi efficace de trajectoires présentant des sauts brusques.

Selon le modèle (MT) de transition, l'état caché augmenté devient $\alpha_t = (x_t, \mu_t, \lambda_t)$. Au lieu d'approcher la distribution de filtrage $p(\alpha_t \mid y_{1..t})$ par un ensemble de particules pondérées comme dans le filtrage particulaire connu de l'art antérieur, le principe de l'approche variationnelle en ligne consiste à approcher cette distribution par une autre fonctionnelle plus simple $q(\alpha_t)$ en minimisant la divergence de Kullback-Leibler par rapport à la vraie distribution de filtrage :

$$D_{\mathrm{KL}}(q\|p) = \int q(\boldsymbol{\alpha}_t) \log \frac{q(\boldsymbol{\alpha}_t)}{p(\boldsymbol{\alpha}_t \mid \boldsymbol{y}_{1..t})} \, d\boldsymbol{\alpha}_t$$

La minimisation ci-dessus de la divergence de Kullback-Leibler avec les outils du calcul variationnel et en imposant une forme séparable (non paramétrique) $q(\alpha_t) = q(X_t)q(\mu_t)q(\lambda_t)$, on obtient la procédure itérative suivante :

$$\begin{cases} q(\boldsymbol{x}_t) \propto \exp \langle \log p(\boldsymbol{y}_{1..t}, \boldsymbol{\alpha}_t) \rangle_{q(\boldsymbol{\mu}_t)q(\boldsymbol{\lambda}_t)} \propto \mathcal{N}(\boldsymbol{x}_t \mid \boldsymbol{x}_t^*, \boldsymbol{\Gamma}_t^*) \\ q(\boldsymbol{\mu}_t) \propto \exp \langle \log p(\boldsymbol{y}_{1..t}, \boldsymbol{\alpha}_t) \rangle_{q(\boldsymbol{x}_t)q(\boldsymbol{\lambda}_t)} \propto \mathcal{N}(\boldsymbol{\mu}_t \mid \boldsymbol{\mu}_t^*, \boldsymbol{\lambda}_t^*) \\ q(\boldsymbol{\lambda}_t) \propto \exp \langle \log p(\boldsymbol{y}_{1..t}, \boldsymbol{\alpha}_t) \rangle_{q(\boldsymbol{x}_t)q(\boldsymbol{\mu}_t)} \propto \mathcal{W}_{n^*}(\boldsymbol{\lambda}_t \mid \boldsymbol{S}_t^*) \end{cases}$$

où les paramètres sont mis à jour d'une manière itérative selon le schéma suivant :

$$\begin{aligned} \boldsymbol{x}_t^* &= \boldsymbol{\Gamma}_t^{*-1}(\boldsymbol{S}^T \boldsymbol{\Sigma}_g^{-1} \boldsymbol{G}_{tt} \boldsymbol{K}_{tt}^{-1} \boldsymbol{K}_{tp} + \langle \boldsymbol{\lambda}_t \rangle \langle \boldsymbol{\mu}_t \rangle) \\ \boldsymbol{\Gamma}_t^* &= \boldsymbol{S}^T \boldsymbol{\Sigma}_g^{-1} \boldsymbol{S} + \langle \boldsymbol{\lambda}_t \rangle \\ \boldsymbol{\mu}_t^* &= \boldsymbol{\lambda}_t^{*-1}(\langle \boldsymbol{\lambda}_t \rangle \langle \boldsymbol{x}_t \rangle + \boldsymbol{\lambda}_t^p \boldsymbol{\mu}_t^p) \\ \boldsymbol{\lambda}_t^* &= \langle \boldsymbol{\lambda}_t \rangle + \boldsymbol{\lambda}_t^p \\ n^* &= \bar{n} + 1 \\ \boldsymbol{S}_t^* &= (\langle \boldsymbol{x}_t \boldsymbol{x}_t^T \rangle - \langle \boldsymbol{x}_t \rangle \langle \boldsymbol{\mu}_t \rangle^T - \langle \boldsymbol{\mu}_t \rangle \langle \boldsymbol{x}_t \rangle^T + \langle \boldsymbol{\mu}_t \boldsymbol{\mu}_t^T \rangle + \bar{\boldsymbol{S}}^{-1})^{-1} \\ \boldsymbol{\mu}_t^p &= \boldsymbol{\mu}_{t-1}^* \\ \boldsymbol{\lambda}_t^p &= (\boldsymbol{\lambda}_{t-1}^{*-1} + \bar{\boldsymbol{\lambda}}^{-1})^{-1} \end{aligned}$$

Notons que toutes les variables ont des espérances mathématiques simples à calculer :

$$\begin{cases} \langle \boldsymbol{x}_t \rangle = \boldsymbol{x}_t^*, \quad \langle \boldsymbol{x}_t \boldsymbol{x}_t^T \rangle = \boldsymbol{\Gamma}_t^{*-1} + \boldsymbol{x}_t^* \boldsymbol{x}_t^{*T}, \\ \langle \boldsymbol{\mu}_t \rangle = \boldsymbol{\mu}_t^*, \quad \langle \boldsymbol{\mu}_t \boldsymbol{\mu}_t^T \rangle = \boldsymbol{\lambda}_t^{*-1} + \boldsymbol{\mu}_t^* \boldsymbol{\mu}_t^{*T}, \\ \langle \boldsymbol{\lambda}_t \rangle = n^* \boldsymbol{S}_t^* \end{cases}$$

On notera que pour une fonction de vraisemblance de forme générale $p(y_t \mid x_t)$, la position de la cible ne possède pas une distribution $q(x_t)$ analytique simple. Pour calculer sa moyenne et sa covariance, il faudrait procéder par des simulations de Monte-Carlo comme dans l'art antérieur. Dans l'algorithme (AF) de filtrage variationnel, en revanche, grâce à la forme linéaire et gaussienne de la vraisemblance, la moyenne et la covariance de $x_t$ sont calculées d'une manière exacte, d'où une implémentation rapide de l'algorithme variationnel.

Il convient également de noter que le calcul de $q(\alpha_t)$ est implémenté d'une manière séquentielle (dans le temps) en se basant uniquement sur la connaissance de $q(\mu_{t-1})$. En effet, en tenant en compte la forme séparable de la distribution à l'instant précédent t-1, la distribution de filtrage s'écrit :

$$\begin{aligned} p(\boldsymbol{\alpha}_t|\boldsymbol{y}_{1:t}) &\propto p(\boldsymbol{y}_t|\boldsymbol{x}_t)p(\boldsymbol{x}_t,\boldsymbol{\lambda}_t|\boldsymbol{\mu}_t)\int p(\boldsymbol{\mu}_t|\boldsymbol{\mu}_{t-1})q(\boldsymbol{\alpha}_{t-1})d\boldsymbol{\alpha}_{t-1} \\ &\propto p(\boldsymbol{y}_t|\boldsymbol{x}_t)p(\boldsymbol{x}_t,\boldsymbol{\lambda}_t|\boldsymbol{\mu}_t)\int p(\boldsymbol{\mu}_t|\boldsymbol{\mu}_{t-1})q(\boldsymbol{\mu}_{t-1})d\boldsymbol{\mu}_{t-1} \end{aligned}$$

où seule l'intégration par rapport à $\mu_{t-1}$ est utilisée grâce à la forme séparable de $q(\alpha_{t-1})$. On se base ici sur la corrélation temporelle de la trajectoire (auto-corrélation) en utilisant la probabilité de la position de la cible à l'instant précédent. La dépendance temporelle est limitée dans la présente invention à la fonctionnelle d'une seule composante. Dans un contexte décentralisé, la communication entre 2 unités en charge de la mise à jour de la distribution de filtrage se trouve limitée à l'envoi de $q(\mu_{t-1})$ qui représente ainsi la statistique suffisante (SS). Ce $q(\mu_{t-1})$ repésente la connaissance de la trajectoire à l'instant précédent. On notera que dans le cas d'un filtrage particulaire, cette connaissance nécessite une pluralité de particules (et donc une quantité importante de données). De plus, un simple calcul permet de montrer que cette fonctionnelle est une gaussienne et donc que la communication entre deux noeuds leaders successifs se résume à l'envoi d'une moyenne et d'une covariance. Ainsi, l'approche classique particulaire consistant à mettre à jour dans un premier temps les densités de probabilité et à les approximer dans un deuxième temps n'est plus nécessaire. Ce traitement conjoint des données et de l'approximation des statistiques suffisantes est particulièrement avantageux en termes d'efficacité et de rapidité.

On comprend donc que pour chaque itération, on obtient des données (SS) représentatives de statistiques suffisantes qui permettent la mise à jour du filtre variationnel à l'instant suivant (de t-1 à t ou de t à t+1). De façon avantageuse, ces données sont représentatives d'une moyenne et une covariance de la position estimée de la cible (X).

Pour des raisons de clarté, on présente, dans la suite, d'une manière séparée le protocole de tracking de cibles passives et le protocole de localisation de capteurs mobiles.

**Cibles passives**

Un mode de réalisation du procédé selon l'invention, représentatif d'un protocole global de tracking de cibles passives est représenté sur la figure 2.

Comme mentionné précédemment, le procédé comporte, lorsque la (ou les) cible(s) (X) est (ou sont) une (ou des) cible(s) passive(s) par rapport au signal des capteurs (S), une étape de détection (50) d'au moins une cible (X) présente dans la région (Z), par au moins un des capteurs (S) à un instant initial. De plus, le procédé comporte, à chaque instant (t), une itération d'une étape de sélection (51) d'un ensemble (1) de n capteurs (S), grâce à au moins un algorithme (AA) d'activation, préalablement à l'étape de sélection (52) du capteur leader (SL), ce dernier étant alors sélectionné au sein de cet ensemble (I) grâce à l'algorithme (AS) de sélection.

D'autre part, dans certains modes de réalisation, lorsqu'il existe plusieurs cibles et qu'elles sont passives, le capteur leader (SL) de chacune des cibles (X) met en oeuvre, lors de l'étape de mise à jour (551), une étape d'association (551 a) probabiliste des données représentatives de la position de la cible (X) et de sa trajectoire (T), issues du filtre variationnel utilisé par ce capteur leader (SL), pour déterminer à quelle (X) cible correspond un ensemble de données. En effet, dans le cas de plusieurs cibles, on peut utiliser un filtre variationnel par cible. Cependant, les capteurs n'ont pas d'information relative à quelle cible le filtre correspond. Des probabilités sur la correspondance entre les données du filtre et la cible permettent donc de déterminer à quelle (X) cible correspond un ensemble de données d'un filtre.

De plus, au cours du filtrage variationnel, l'étape de prédiction (552) de la (ou des) position(s) de la (ou des) cible(s) à l'instant suivant s'accompagne, lorsque la (ou les) cible(s) (X) est (ou sont) une (ou des) cible(s) passive(s) par rapport au signal des capteurs (S), d'une réitération de l'étape de sélection (51) d'un ensemble (I) de n capteurs (S), grâce à au moins un algorithme (AA) d'activation et de l'étape de sélection (52) d'un capteur leader (SL) grâce à l'algorithme (AS) de sélection. On sélectionne ainsi, grâce à la trajectoire prédite, les capteurs qui seront pertinents pour continuer le suivi de la cible.

Enfin, l'étape de prédiction (552) de la (ou des) position(s) de la (ou des) cible(s) à l'instant suivant est suivie, lorsque la (ou les) cible(s) (X) est (ou sont) une (ou des) cible(s) passive(s) par rapport au signal des capteurs (S), d'une étape d'envoi (56), par le capteur leader (SL) de l'instant (t) vers le capteur leader de l'instant suivant, de données (SS) représentatives de statistiques suffisantes pour la mise à jour du filtre variationnel à l'instant suivant et d'une réitération du procédé. Comme mentionné précédemment, ces données pourront, de façon avantageuse, être représentatives d'une moyenne et une covariance de la position estimée de la cible (X)

**Capteurs mobiles**

On notera que la présente invention est particulièrement adaptée pour les capteurs mobiles de type « manets » (« mobile Ad-hoc networks » selon la terminologie anglo-saxonne).

Contrairement au cas des cibles passives, la procédure de localisation est implémentée par les capteurs mobiles eux-mêmes. Par conséquent, la localisation ne nécessite plus certaines étapes comme l'association probabiliste des données, ou l'envoi des statistiques suffisantes.

Un mode de réalisation du procédé selon l'invention, représentatif d'un protocole mis en oeuvre pour des cibles consistant en des capteurs mobiles est représenté sur la figure 3.

On notera ici que le cas où la cible est un seul capteur mobile et le cas où les cibles sont plusieurs capteurs mobiles se traitent exactement avec le même algorithme, puisqu'ils sont automatiquement définis comme capteur leader pour leur propre suivi, les autres capteurs de position connue (les ancres) permettant la localisation géographique dans la région (Z). Comme mentionné précédemment, lorsque la (ou les) cible(s) (X) est (ou sont) un (ou des) capteur(s) (S) mobile(s), il(s) est (ou sont) sélectionné(s), grâce à l'algorithme (AS) de sélection, comme capteur(s) leader(s) (SL). Le capteur mobile se sélectionne lui-même comme capteur leader pour estimer sa propre position et il sélectionne, grâce à au moins un algorithme (AA) d'activation, un ensemble (I) de n capteurs (S) voisins pour estimer sa position dans la région (Z).

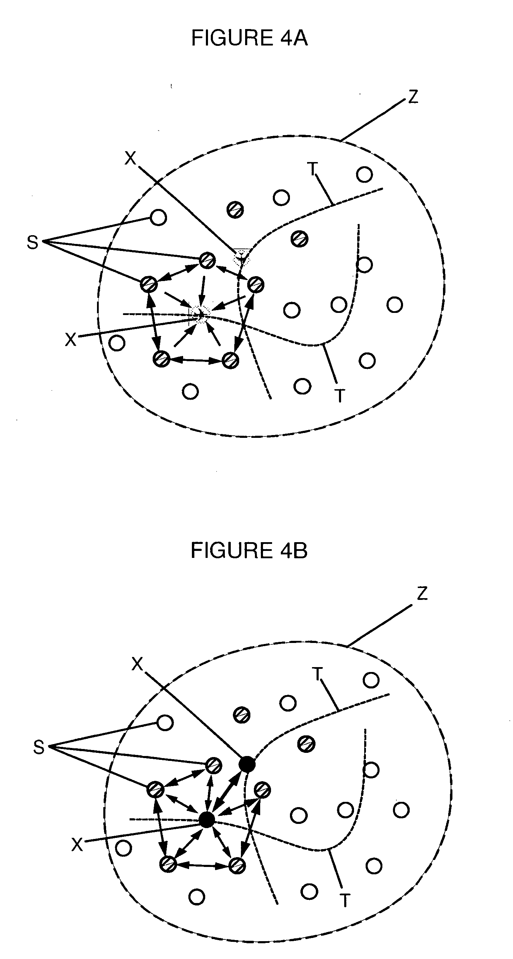

Le capteur mobile échange donc ici les données de similarité avec des capteurs ancres (de position connue) qui l'entourent, pour faire la régression expliquée précédemment. Il exploite ainsi les données (DS) de similarité ancre/ancre, capteur /ancre et capteur-capteur. En effet, dans le cas de 2 capteurs mobiles cibles, ces derniers peuvent également échanger des données (DS) de similarité, comme illustré sur la figure 4B (flèches bilatérales entre les 2 capteurs mobiles cibles (X) représentés par des points noirs) et peuvent échanger des données (DS) de similarité avec les autres capteurs (S) fixes du réseau (ancres de positions connues) comme illustré sur la figure 4B (flèches bilatérales entre les 2 capteurs mobiles cibles (X) représentés par des points noirs et les capteurs (S) de l'ensemble (I) sélectionné représentés par des points rayés, les points blancs représentant des capteurs qui n'ont pas été sélectionnés dans l'ensemble). En revanche, dans le cas de cibles passives, seuls les capteurs (S) échangent des données (DS) de similarité entre eux, comme illustré sur la figure 4A (flèches bilatérales entre les capteurs (S) de l'ensemble (I) sélectionné représentés par des points rayés) et captent la cible (flèches unilatérales entre les cibles (X) et les capteurs (S) de l'ensemble (I) sélectionné représentés par des points rayés).

On notera que les figures 4A et 4B illustrent le fait que dans le cas de capteurs mobiles cibles, sur la figure 4B, ces derniers s'échangent des données de similarité et il n'y a donc pas besoin de faire une association probabiliste pour savoir à quelle cible correspond un ensemble de données, tandis que dans le cas de cibles passives, (un avion à titre d'exemple non limitatif) sur la figure 4A, il est nécessaire de distinguer les 2 cibles (avec leur trajectoires en pointillés), en utilisant l'association probabiliste décrite précédemment. D'autre part, l'étape de prédiction (552) de la (ou des) position(s) de la (ou des) cible(s) à l'instant suivant est suivie, lorsque la (ou les) cible(s) (X) est (ou sont) un (ou des) capteur(s) (S) mobile(s), d'une étape d'effacement des données traitées par les moyens (S1) de traitement du capteur leader, à l'exception des données (SS) représentatives de statistiques suffisantes pour la mise à jour du filtre variationnel de ce capteur leader (SL) à l'instant suivant, puis d'une réitération du procédé.

On comprend donc que la présente invention apporte une solution efficace au problème d'imprécision/non-connaissance/variation du modèle d'observation (de fonctionnement des capteurs). En fait, l'invention permet de s'affranchir de la connaissance du modèle en exploitant des données de similarité entre les capteurs activés dont les positions sont connues. Ces données supplémentaires permettent d'apprendre localement le modèle en utilisant un principe de régression matricielle. De plus, le résultat de cet apprentissage aboutit à un modèle de vraisemblance linéaire gaussien permettant une implémentation efficace du filtre variationnel (ou du filtre de Kalman). Les équations obtenues peuvent être interprétées comme une version généralisée du filtre de Kalman avec une matrice de covariance d'état aléatoire. Le filtrage bayésien permet aussi le calcul de la distribution prédictive de la position de la cible. Cette distribution est utilisée pour concevoir un protocole d'activation des capteurs les plus pertinents pour suivre la cible dans un cadre complètement distribué. Ces fonctionnalités de la présente invention fournissent de nombreux avantages tels que la rapidité du calcul pour la localisation et le suivi, la faible consommation d'énergie et la faible quantité d'information échangée, la robustesse aux variations des capteurs, etc.

Plusieurs aspects fonctionnels décrits dans la présente description sont désignés comme étant supportés par des « moyens de traitement » utilisant des algorithmes. On comprendra notamment à la lecture de la présente demande que les composants de la présente invention, comme généralement décrits et illustrés dans les figures, peuvent être arrangés et conçus selon une grande variété de configurations différentes. Ainsi, la description de la présente invention et les figures afférentes ne sont pas prévues pour limiter la portée de l'invention mais représentent simplement des modes de réalisation choisis. Par exemple, les moyens de traitement peuvent comporter des ressources informatiques et/ou au moins un circuit électronique, tel qu'un circuit intégré par exemple et/ou par d'autre types d'arrangement de composants, tels que par exemple des semi-conducteurs, des portes logiques, des transistors, un ou des processeur (s), ou d'autres composants discrets. De tels moyens de traitement peuvent également supporter une ou plusieurs application(s) logicielle(s) ou portion(s) de code exécutable(s) au sein d'au moins un environnement logiciel pour la mise en oeuvre des fonctionnalités décrites ici. Les fonctionnalités sont décrites en référence à des algorithmes pour illustrer que des moyens de traitement emploieront des moyens fonctionnels qui correspondent à des algorithmes de traitement, peuvent en fait être implémentés par exemple sous la forme d'instructions de code exécutable. Par exemple, les capteurs pourront comporter des moyens de mémorisation stockant au moins des données représentatives des algorithmes mais il est évident que, les capteurs pouvant être munis de moyens de communication, l'ensemble des données nécessaires à la mise en oeuvre de l'invention n'a pas à être nécessairement stocké dans les capteurs et peuvent n'être présentes que sous forme volatile et que les moyens de traitement pourront utiliser des données représentatives d'algorithmes ou de résultats de traitements basés sur ces algorithmes, en provenance d'une source extérieure, bien que la présente invention permet justement de ne pas nécessiter ce type d'agencement puisqu'elle réduit les coûts en termes de traitement de données et de communication, ce qui la rend particulièrement adaptée à des réseaux de capteurs isolés à ressources énergétiques limitées et peu ou pas renouvelables.

De plus, un ou plusieurs bloc(s) physique(s) ou logique(s) d'instructions machine peuvent, par exemple, être organisés en objet, procédé, ou fonction. De plus, les routines et instructions utilisées par ces moyens de traitement n'ont pas besoin d'être physiquement localisés ensemble, mais peuvent comporter des instructions disparates stockées dans différents endroits qui, une fois réunis fonctionnellement et logiquement ensemble, forment l'algorithme mis en oeuvre par des moyens de traitement tel que décrit ici, pour réaliser la fonction indiquée pour l'algorithme. Une instruction simple de code exécutable, ou une pluralité d'instructions, peut en fait être distribuée parmi plusieurs différents segments de code ou parmi différents programmes et stockée dans plusieurs blocs de mémoires. De même, des données opérationnelles peuvent être identifiées et illustrées dans des moyens de traitement, et peuvent être incorporées sous n'importe quelle forme appropriée et être organisées dans n'importe quel type approprié de structure de données. Les données opérationnelles peuvent être rassemblées ou peuvent être réparties sur différents endroits incluant différents dispositifs de stockage finis, et peuvent exister, au moins partiellement, simplement en tant que signaux électroniques sur un système ou un réseau. On désigne parfois ici le dispositif comme comportant des moyens de traitement dans certains modes de réalisation, mais l'homme de métier comprendra qu'il peut en fait être associé à de tels moyens ou les inclure dans sa structure. Le dispositif comporte des moyens de traitement de données permettant de réaliser les fonctions décrites et pourra donc comporter (ou être associé à) des circuits spécifiques réalisant ces fonctions ou comporter (ou être associé à), d'une manière générale, des ressources informatiques permettant d'exécuter des instructions remplissant les fonctions décrites précédemment. L'homme de métier comprendra que de nombreuses variantes de réalisation sont possibles.

Cependant, l'invention peut avantageusement être implémentée dans un réseau de capteur ayant des ressources et donc un coût de production limités, grâce à la rapidité et la simplification permises par les algorithmes décrits ici.

Enfin, les équations détaillées ici sont une forme d'expression particulièrement adaptée à la mise en oeuvre de l'invention, mais l'homme de métier appréciera les adaptations possibles de la formulation mathématique pour obtenir les mêmes fonctions et avantages que ceux décrits ici pour les algorithmes.

## Revendications

1. Procédé de localisation et/ou de suivi d'au moins une cible (X) par un réseau d'émetteurs/récepteurs, dits capteurs (S), dont au moins une partie a une localisation géographique connue, comportant chacun des moyens (S1) de traitement de données mettant en oeuvre au moins un algorithme (AA, AS, AR, AF) pour la localisation et/ou le suivi de cible(s), des moyens (S2) d'émission/réception d'un signal décroissant avec la distance et des moyens (S21) de communication, le réseau de capteurs (S) couvrant au moins une zone géographique, dite région (Z), **caractérisé en ce qu'**il comporte, pour chaque instant (t), une itération des étapes suivantes :

   - sélection (51) d'un ensemble (I) de n capteurs (S), grâce à au moins un algorithme (AA) d'activation, et sélection (52) d'un capteur, dit leader (SL), pour chaque cible (X), grâce à au moins un algorithme (AS) de sélection de leader, pour la mise en oeuvre des étapes suivantes,
   - échange (53) de données, dites de similarité (DS), entre les capteurs (S) de l'ensemble (I) et le capteur leader (SL), ces données étant représentatives des mesures de puissance du signal entre, d'une part, les capteurs (S) et la cible et entre, d'autre part, les capteurs (S) eux-mêmes,
   - détermination (54) d'une distribution (DP) de probabilité de la position de la cible (X) dans la région (Z), par le capteur leader (SL), grâce à au moins un algorithme (AR) de régression matricielle probabiliste basée essentiellement sur la formulation du problème dans l'espace de Hubert à noyau reproduisant (RKHS) déterminant, sur la base des données de similarité (DS), une distribution de probabilité des produits scalaires entre les positions des capteurs et de la cible, pour estimer ladite distribution (DP) de probabilité de la position de la cible (X).

2. Procédé selon la revendication 1, **caractérisé en ce que** le procédé comporte, lorsque la (ou les) cible(s) (X) est (ou sont) une (ou des) cible(s) passive(s) par rapport au signal des capteurs (S), une étape de détection (50) d'au moins une cible (X) présente dans la région (Z), par au moins un des capteurs (S) à un instant initial, et comporte, à chaque instant (t), une itération de l'étape de sélection (51) d'un ensemble (I) de n capteurs (S), préalablement à l'étape de sélection (52) du capteur leader (SL), ce dernier étant alors sélectionné au sein de cet ensemble (I) grâce à l'algorithme (AS) de sélection.

3. Procédé selon la revendication 1, **caractérisé en ce que** lorsque la (ou les) cible(s) (X) est (ou sont) un (ou des) capteur(s) (S) mobile(s), il(s) est (ou sont) sélectionné(s) (52), grâce à l'algorithme (AS) de sélection, comme capteur (s) leader(s) (SL) et sélectionne (51), grâce à au moins un algorithme (AA) d'activation, un ensemble (I) de n capteurs (S) voisins pour estimer la position de la cible (X) dans la région (Z).

4. Procédé selon une des revendications 1 à 3, **caractérisé en ce que** le procédé comporte, à chaque instant (t), une itération d'une étape de suivi (55) de la cible (X) par le capteur leader (SL), par mise à jour (551) de la position de la cible (X) grâce à au moins un algorithme (AF) de filtrage variationnel basé sur un filtre variationnel fournissant une estimation de la position de la cible (X).

5. Procédé selon la revendication 4, **caractérisé en ce que** le filtre variationnel utilisé au cours de l'étape de mise à jour (551) repose sur une utilisation d'une fonction de vraisemblance de la position de la cible (X) basée sur la distribution (DP) de probabilité de la position de la cible (X), estimée grâce aux produits scalaires entre les positions des capteurs et de la cible qui ont été déterminés sur la base des données de similarité (DS) au cours de l'étape de détermination (54), et sur une utilisation d'un modèle (MT), dit de transition, reposant notamment sur une corrélation temporelle d'une trajectoire (T) supposée de la cible (X) d'un instant à l'autre.

6. Procédé selon une des revendications 4 à 5, **caractérisé en ce que**, lorsqu'il existe plusieurs cibles et qu'elles sont passives, le capteur leader (SL) de chacune des cibles (X) met en oeuvre, lors de l'étape de mise à jour (551), une étape d'association (551 a) probabiliste des données représentatives de la position de la cible (X) et de sa trajectoire (T), issues du filtre variationnel utilisé par ce capteur leader (SL), pour déterminer à quelle (X) cible correspond un ensemble de données.

7. Procédé selon une des revendications 4 à 6, **caractérisé en ce que** l'étape de suivi (55) comporte, à chaque instant (t), une itération d'une étape de prédiction (552) de la (ou des) position(s) de la (ou des) cible(s) à l'instant suivant.

8. Procédé selon la revendication 7, **caractérisé en ce que** l'étape de prédiction (552) de la (ou des) position(s) de la (ou des) cible(s) à l'instant suivant s'accompagne, lorsque la (ou les) cible(s) (X) est (ou sont) une (ou des) cible (s) passive(s) par rapport au signal des capteurs (S), d'une réitération de l'étape de sélection (51) d'un ensemble (I) de n capteurs (S), grâce à au moins un algorithme (AA) d'activation et de l'étape de sélection (52) d'un capteur leader (SL) grâce à l'algorithme (AS) de sélection.

9. Procédé selon une des revendications 7 et 8, **caractérisé en ce que** l'étape de prédiction (552) de la (ou des) position(s) de la (ou des) cible(s) à l'instant suivant est suivie, lorsque la (ou les) cible(s) (X) est (ou sont) une (ou des) cible(s) passive(s) par rapport au signal des capteurs (S), d'une étape d'envoi (56), par le capteur leader (SL) de l'instant (t) vers le capteur leader de l'instant suivant, de données (SS) représentatives de statistiques suffisantes pour la mise à jour du filtre variationnel à l'instant suivant et d'une réitération du procédé.

10. Procédé selon une des revendications 7 à 9, **caractérisé en ce que** l'étape de prédiction (552) de la (ou des) position(s) de la (ou des) cible(s) à l'instant suivant est suivie, lorsque la (ou les) cible(s) (X) est (ou sont) un (ou des) capteur(s) (S) mobile(s), d'une étape d'effacement des données traitées par les moyens (S1) de traitement du capteur leader, à l'exception des données (SS) représentatives de statistiques suffisantes pour la mise à jour du filtre variationnel de ce capteur leader (SL) à l'instant suivant, puis d'une réitération du procédé.

11. Procédé selon une des revendications 1 à 10, **caractérisé en ce que** les données (DS) de similarité sont considérées comme des produits scalaires euclidien entre les capteurs et la cible et entre les capteurs eux-mêmes, dans un espace de Hilbert à noyau reproduisant.

12. Procédé selon une des revendications 1 à 11, **caractérisé en ce que** la distribution (DP) de probabilité de la position de la cible (X) dans la région (Z) est une gaussienne.

13. Procédé selon une des revendications 9 à 12, **caractérisé en ce que** les données (SS) représentatives de statistiques suffisantes sont représentatives d'une moyenne et une covariance de la position estimée de la cible (X).

14. Système de localisation et/ou de suivi d'au moins une cible (X) par un réseau d'émetteurs/récepteurs, dits capteurs (S), dont au moins une partie a une localisation géographique connue, comportant chacun des moyens (S1) de traitement de données, des moyens (S2) d'émission/réception d'un signal décroissant avec la distance et des moyens (S21) de communication, le réseau de capteurs (S) couvrant au moins une zone géographique, dite région (Z), **caractérisé en ce que** les moyens (S1) de traitement de données implémentent au moins un algorithme (AA, AS, AR, AF) pour la localisation et/ou le suivi de cible(s) par la mise en oeuvre du procédé selon l'une des revendications précédentes.

15. Système selon la revendication 14, **caractérisé en ce que** moyens (S2) d'émission/réception d'un signal décroissant avec la distance et des moyens (S21) de communication sont des mêmes moyens permettant à la fois les mesures et les communications pour la mise en oeuvre du procédé.

**Patentansprüche**

1. Verfahren zum Orten und/oder Verfolgen mindestens eines Ziels (X) mittels eines Netzes von Sendern/Empfängern, die als Sensoren (S) bezeichnet werden, von denen zumindest ein Teil eine bekannte geographische Position hat, die jeweils aufweisen: Mittel (S1) zum Verarbeiten von Daten, die mindestens einen Algorithmus (AA, AS, AR, AF) für das Orten und/oder Verfolgen eines Ziels (von Zielen) anwenden, Mittel (S2) zum Senden/Empfangen eines sich mit der Entfernung abschwächenden Signals, und Kommunikationsmittel (S21), wobei das Netz von Sensoren (S) mindestens eine geographisch Zone, die als Bereich (Z) gezeichnet wird, abdeckt, dadurch gekenntzeichnet, dass es für jeden Augenblick (t) eine Iteration der folgenden Schritte aufweist:

   - Auswählen (51) einer Menge (1) von n Sensoren (S) mit Hilfe mindestens eines Aktivierungsalgorithmus (AA) und Auswählen (52) eines als Hauptsensor (SL) bezeichneten Sensors für jedes Ziel (X) mit Hilfe mindestens eines Hauptsensor-Auswahl-Algorithmus (AS) zum Durchführen der folgenden Schritte,
   - Austauschen (53) von als Ähnlichkeitsdaten (DS) bezeichneten Daten zwischen dem Sensor (S) der Menge (I) und dem Hauptsensor (SL), wobei die Daten für Messungen der Stärke des Signals zwischen einerseits den Sensoren (S) und dem Ziel und zwischen andererseits den Sensoren (S) selbst repräsentativ sind,
   - Ermitteln (54) einer Wahrscheinlichkeitsverteilung (DP) der Position des Ziels (X) im Bereich (Z) mittels des Hauptsensors (SL) mit Hilfe mindestens eines Wahrscheinlichkeits-Matrix-Regressions-Algorithmus (AR) im Wesentlichen basierend auf der Formulierung des Problems im Hilbertraum mit reproduzierendem Kern (RKHS), der auf der Grundlage der Ähnlichkeitsdaten (DS) eine Wahrscheinlichkeitsverteilung der Skalarprodukte zwischen den Positionen der Sensoren und des Ziels ermittelt, um die Wahrscheinlichkeitsverteilung (DP) der Position des Ziels (X) zu schätzen.

2. Verfahren gemäß Anspruch 1, **dadurch gekennzeichnet, dass** das Verfahren, wenn das Ziel (oder die Ziele) (X) bezüglich des Signals der Sensoren (S) ein passives Ziel ist (oder passive Ziele sind), einen Schritt des Detektierens (50) von mindestens einem Ziel (X), das sich im Bereich (Z) befindet, mittels mindestens eines der Sensoren (S) in einem Anfangsaugenblick aufweist, und in jedem Augenblick (t) eine Iteration des Auswählschrittes (51) einer Menge (1) von n Sensoren (S) vor dem Schritt des Auswählens (52) des Hauptsensors (SL) aufweiset, wobei letzterer dann innerhalb der Menge (1) mittels des Auswählalgorithmus (AS) ausgewählt wird.

3. Verfahren gemäß Anspruch 1, **dadurch gekennzeichnet, dass**, wenn das Ziel (oder die Ziele) (X) ein mobiler Sensor (oder mobile Sensoren) (S) ist (oder sind), dieser (oder diese) mittels des Auswählalgorithmus (AS) als Hauptsensor (Hauptsensoren) (SL) ausgewählt wird (oder werden) und mit Hilfe mindestens eines Aktivierungsalgorithmus (AA) eine Menge (1) von n benachbarten Sensoren (S) auswählt, um die Position des Ziels (X) im Bereich (Z) zu schätzen.

4. Verfahren gemäß einem der Ansprüche 1 bis 3, **dadurch gekennzeichnet, dass** das Verfahren in jedem Augenblick (t) eine Iteration eines Schrittes zum Verfolgen (55) des Ziels (X) durch den Hauptsensor (SL) mittels Aktualisieren (551) der Position des Ziels (X) mit Hilfe mindestens eines Variationsfilteralgorithmus (AF) aufweist, der auf einem Variationsfilter basiert, das eine Schätzung der Position des Ziels (X) bereitstellt.

5. Verfahren gemäß Anspruch 4, **dadurch gekennzeichnet, dass** das Variationsfilter, das während des Aktualisierungsschrittes (551) verwendet wird, auf einer Anwendung einer Währscheihlichkeitsfunktion der Position des Ziels (X) basierend auf der Wahrscheinlichkeitsverteilung (DP) der Position des Ziels (X), die mit Hilfe der Skalarprodukte zwischen den Positionen der Sensoren und des Ziels geschätzt wird, die auf der Grundlage der Ähnlichkeitsdaten (DS) während des Ermittlungsschrittes (54) vermittelt werden, und auf einer Anwendung eines Models (MT), das als Übergangsmodell bezeichnet wird, beruht, das im Wesentlichen auf einer zeitlichen Korrelation einer angenommenen Trajektorie (T) des Ziels (X) von einem Augenblick zum anderen beruht.

6. Verfahren gemäß einem der Ansprüche 4 bis 5, **dadurch gekennzeichnet, dass**, wenn es mehrere Ziele gibt und diese passiv sind, der Hauptsensor (SL) von jedem der Ziele (X) während des Aktualisierungsschrittes (551) einen Schritt der Wahrscheinlichkeitszuordnung (551a) der für die Position des Ziels (X) und seine Trajektorie (T) repräsentativen Daten durchführt, die aus dem von dem Hauptsensor (SL) verwendeten Variationsfilter stammen, um zu ermitteln, welchem Ziel (X) eine Menge von Daten entspricht.

7. Verfahren gemäß einem der Ansprüche 4 bis 6, **dadurch gekennzeichnet, dass** der Verfolgungsschritt (55) in jedem Augenblick (t) eine Iteration eines Schrittes des Voraussagens (552) der Position (oder der Positionen) des Ziels (oder der Ziele) im folgenden Augenblick aufweist.

8. Verfahren gemäß Anspruch 7, **dadurch gekennzeichnet, dass** der Schritt des Voraussagens (552) der Position (oder der Positionen) des Ziels (oder der Ziele) im nachfolgenden Augenblick, wenn das Ziel (oder die Ziele) (X) bezüglich des Signals der Sensoren (S) ein passives Ziel ist (oder passive Ziele sind), mit einer Reiteration des Schrittes des Auswählens (51) einer Menge (1) von n Sensoren (S) mit Hilfe mindestens eines Aktivierungsalgorithmus (AA), und des Schrittes des Auswählens (52) eines Hauptalgarithmus (SL) mit Hilfe des Auswählalgorithmus (AS) einhergeht.

9. Verfahren gemäß einem der Ansprüche 7 und 8, dadurch gekenntzeichnet, dass auf den Schritt des Voraussagens (552) der Position (oder der Positionen) des Ziels (oder der Ziele) im nachfolgenden Augenblick, wenn das Ziel (oder die Ziele) (X) bezüglich des Signals der Sensoren (S) ein passives Ziel ist (oder passive Ziele sind), ein Schritt des Sendens (56) mittels des Hauptsensors (SL) des Augenblicks (t) an den Hauptsens or des nachfolgenden Augenblick von Daten (SS), die für Statistiken repräsentativ sind, die für das Aktualisieren des Variationsfilters im nachfolgenden Augenblick ausreichen, und eine Reiteration des Verfahrens folgen.

10. Verfahren gemäß einem der Ansprüche 7 bis 9, **dadurch gekennzeichnet, dass** auf den Schritt des Voraussagens (552) der Position (oder der Positionen) des Ziels (oder der Ziele) (X) im nachfolgenden Augenblick, wenn das Ziel (oder die Ziele) (X) ein mobiler Sensor (S) ist (oder mobile Sensoren sind), ein Schritt des Löschens der von den Verarbeitungsmitteln (S1) des Hauptsensors verarbeiteten Daten mit Ausnahme der Daten (SS), die für Statistiken repräsentativ sind, die für das Aktualisieren des Variationsfilters des Hauptsensors (SL) im nachfolgenden Augenblick ausreichen, und anschließen eine Reiteration des Verfahrens folgen.

11. Verfahren gemäß einem der Ansprüche 1 bis 10, **dadurch gekennzeichnet, dass** die Ähnlichkeitsdaten (DS) als euklidische Skalarprodukte zwischen den Sensoren und dem Ziel und zwischen den Sensoren selbst in einem Hilbertraum mit reproduzierendem Kern betrachtet werden.

12. Verfahren gemäß einem der Ansprüche 1 bis 11, **dadurch gekennzeichnet, dass** die Wahrscheinlichkeitsverteilung (DP) der Position des Ziels (X) im Bereich (Z) eine Gauß-Verteilung ist.

13. Verfahren gemäß einem der Ansprüche 9 bis 12, **dadurch gekennzeichnet, dass** die Daten (S), die für ausreichende Statistiken repräsentativ sind, für einen Mittelwert und eine Kovarianz der geschätzten Position des Ziels (X) repräsentativ sind.

14. System zum Orten und/oder Verfolgen von mindestens einem Ziel (X) mittels eines Netzes von Sendern/Empfängern, die als Sensoren (S) bezeichnet werden, von denen zumindest ein Teil eine bekannte geographische Position hat, jeweils aufweisend Mittel (S1) zum Verarbeiten von Daten, Mittel (S2) zum senden/Empfangen eines Signals, das sich mit der Entfernung abschwächt, und Kommunikationsmittel (S21), wobei das Netz von Sensoren (S) mindestens eine geographische Zone, die als Bereich (Z) bezeichnet wird, abdeckt, **dadurch gekennzeichnet, dass** die Mittel (S1) zur Verarbeitung von Daten mindestens einen Algorithmus (AA, AS, AR, AF) für die Ortung und/oder das Verfolgen eines Ziels (von Zielen) mittels des Durchführens des Verfahrens gemäß einem der vorergehenden Ansprüche implementieren.

**15.** System gemäß Anspruch 14, **dadurch gekennzeichnet, dass** Mittel (S2) zum Senden/Empfangen eines sich mit der Entfernung abschwächenden Signals und Kommunikationsmittel (S21) gleiche Mittel sind, die gleichseitig das Messen und die Kommunikation für das Durchführen des Verfahrens ermöglichen.

## Claims

**1.** Method for locating and/or tracking at least one target (X) through a network of transmitters/receivers, called sensors (S), at least a part of which has a known geographic vocation, each comprising means (S1) for processing data implementing at least one algorithm (AA, AS, AR, AF) for locating and/or tracking a target or targets, means (S2) for transmitting/receiving a signal decreasing with the distance, and means (S21) for communicating, the network of sensors (S) covering at least one geographic zone, called a region (Z), **characterised in that**, for any instant (t), it comprises an iteration of the following steps:

- selection (51) of a set (I) of n sensors (S), with the aid of at least one activation algorithm (AA), and selection (52) of a sensor, called the leader (SL), for each target (X), with the aid of at least one leader selection algorithm (AS), for implementation of the hollowing steps,
- exchange (53) of data, called similarity (DS), between the sensors (S) of the set (I) and the leader sensor (SL), these data being representative of the measurements of the power of the signal between on the one hand the sensors (S) and the target and on the other hand the sensors (S) themselves,
- determination (54) of a probability distribution (DP) for the position of the target (X) in the region (Z), by the leader sensor (SL), with the aid of at least one probability matrix regression algorithm (AR) based essentially on the formulation of the problem in the reproducing kernel Hubert space (RKHS) determining, on the basis of the similarity data (DS), a probability distribution for the scalar products between the positions of the sensors and of the target, to estimate said probability distribution (DP) for the position of the target (X).

**2.** Method according to claim 1, **characterised in that** when the target (or targets) (X) is (or are) a passive target (or passive targets) in relation to the signal of the sensors (S), the method comprises a detection step (50) for detection of at least one target (X) present in the region (Z), through at least one of the sensors (S) at an initial instant, and comprises, at any instant (t), an iteration of the selection step (51) for selection of a set (I) of n sensors (S), prior to the selection step (52) for selection of the leader sensor (SL), the latter then being selected within that set (I) with the aid of the selection algorithm (AS).

**3.** Method according to claim 1, **characterised in that** when the target (or targets) is (or are) a moving sensor (or moving sensors) (S), it (or they) is (or are) selected (52) with the aid of the selection algorithm (AS), as leader sensor or sensors (SL), and selects (51), with the aid of at least one activation algorithm (AA), a set (I) of n neighbouring sensors (S) to estimate the position of the target (X) in the region (Z).

**4.** Method according to one of claims 1 to 3, **characterised in that**, at any instant (t), the method comprises an iteration of a tracking step (55) for tracking the target (X) through the leader sensor (SL), by updating (551) the position of the target (X) with the aid of at least one variational filtering algorithm (AF) based on variational filter supplying an estimation of the position of the target (X).

**5.** Method according to claim 4, **characterised in that** the variational filter used in the course of the updating step (551) is based on the use of a probability function for the position of the target (X) based on the probability distribution (DP) for the position of the target (X), estimated with the aid of the scalar products between the positions of the sensors and of the target which were determined on the basis of the similarity data (DS) in the course of the determination step (54), and on a use of a model (MT), called a transition, based in particular on a temporal correlation of an assumed trajectory (T) of the target (X) from one instant to the next.

**6.** Method according to one of claims 4 to 5, **characterised in that**, when there are a plurality of targets and they are passive, the leader sensor (SL) for each of the targets (X) implements, during the updating step (551), a probability association step (551a) for the data representative of the position of the target (X) and its trajectory (T), obtained from the variational filter used by this leader sensor (SL), to determine the target (X) to which a set of data corresponds.

**7.** Method according to one of claims 4 to 6, **characterised in that**, at any instant (t), the tracking step (55) comprises an iteration of a prediction step (552) for prediction of the position (or positions) of the target (or targets) at the next instant.

**8.** Method according to claim 7, **characterised in that** the prediction step (552) for prediction of the position (or positions) of the target (or targets) at the next instant is accompanied, when the target (or targets) (X) is (or are) a passive target (or passive targets) in relation to the signal of the sensors (S), by a reiteration of the selection step (51) for selection of a set (I) of n sensors (S), with the aid of at least one activation algorithm (AA) and the selection step (52) for selection of a leader sensor (SL) with the aid of the selection algorithm (AS).

**9.** Method according to one of claims 7 and 8, **characterised in that** the prediction step (552) for prediction of the position (or positions) of the target (or targets) at the next instant is followed, when the target (or targets) is (or are) a passive target (or passive targets) in relation to the signal of the sensors (S), by a step (56) for sending, by the leader sensor (SL) at the instant (t) to the leader sensor of the next instant, data (SS) representative of statistics sufficient for updating the variational filter at the next instant, and by a reiteration of the method.

**10.** Method according to one of claims 7 to 9, **characterised in that** the prediction step (552) for prediction of the position (or positions) of the target (or targets) at the next instant is followed, when the target (or targets) is (or are) a moving sensor (or moving sensors) (S), by a step in which the data processed by the processing means (S1) of the leader sensor is erased, except for the data (SS) representative of statistics sufficient for the updating of the variational filter for this leader sensor (SL) at the next instant, then by a reiteration of the method.

**11.** Method according to one of claims 1 to 10, **characterised in that**, the similarity data (DS) are considered as Euclidian scalar products between the sensors and the target and between the sensors themselves, in a reproducing kernel Hilbert space.

**12.** Method according to one of claims 1 to 11, **characterised in that** the probability distribution (DP) for the position of the target (X) in the region (Z) is a Gaussian distribution.

**13.** Method according to one of claims 9 to 12, **characterised in that** the data (SS) representative of sufficient statistics are representative of an average and a covariance for the estimated position of the target (X).

**14.** System for locating and/or tracking at least one target (X) through a network of transmiters/receivers, called sensors (S), at least a part of which has a known geographic location, each comprising means (S1) for processing data, means (S2) for transmitting/receiving a signal decreasing with the distance, and means (S21) for communicating, the network of sensors (S) covering at least one geographic zone, called a region (Z), **characterised in that** the means (S1) for processing data implement at least one algorithm (AA, AS, AR, AF) for locating and/or tracking a target or targets by implementing the method according to one of the preceding claims.

**15.** System according to claim 14, **characterised in that** means (52) for transmitting/receiving a signal degreasing with the distance and means (S21) for communicating are the same means permitting both the measurements and the communications for the implementation of the method.

FIGURE 1

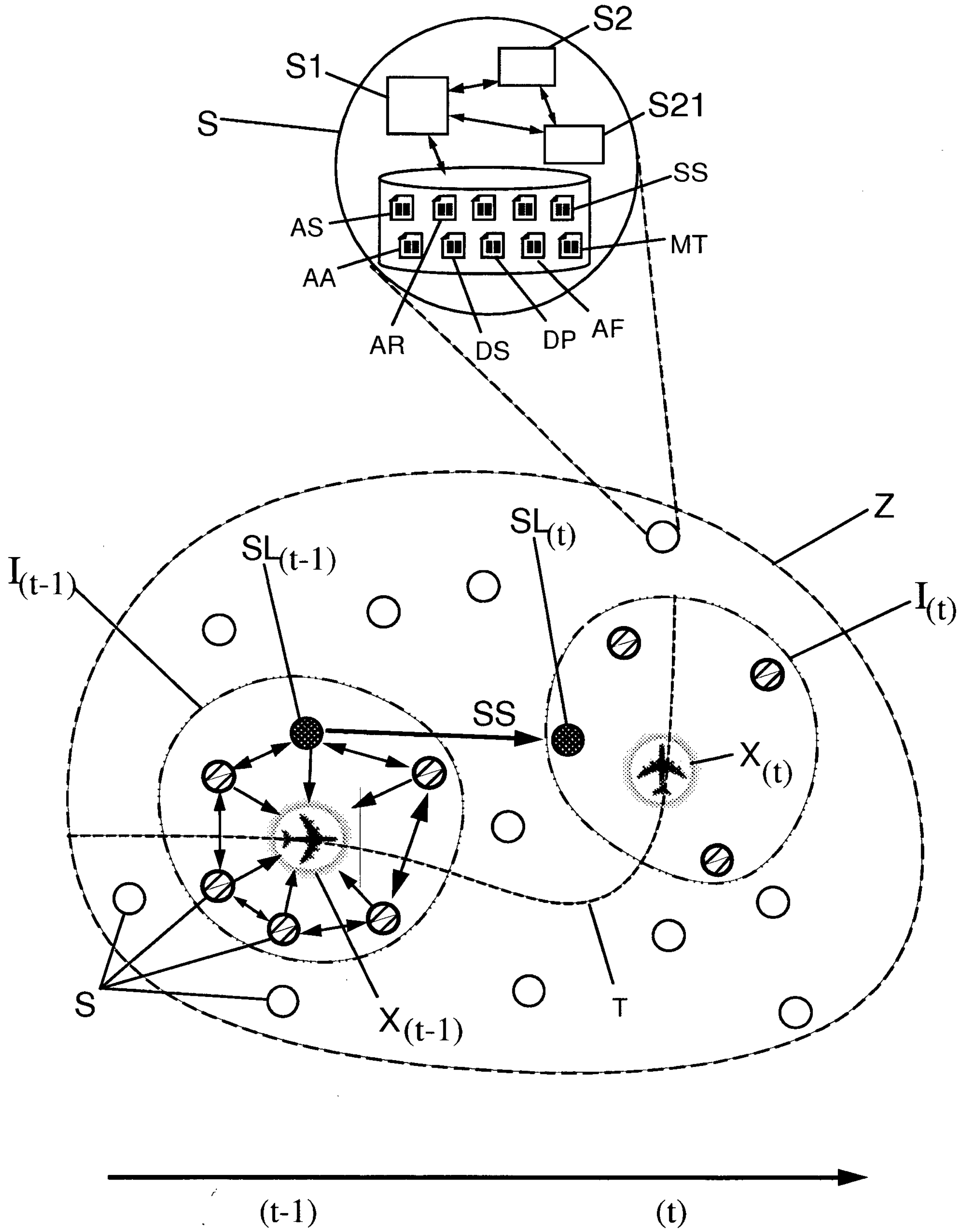

FIGURE 2

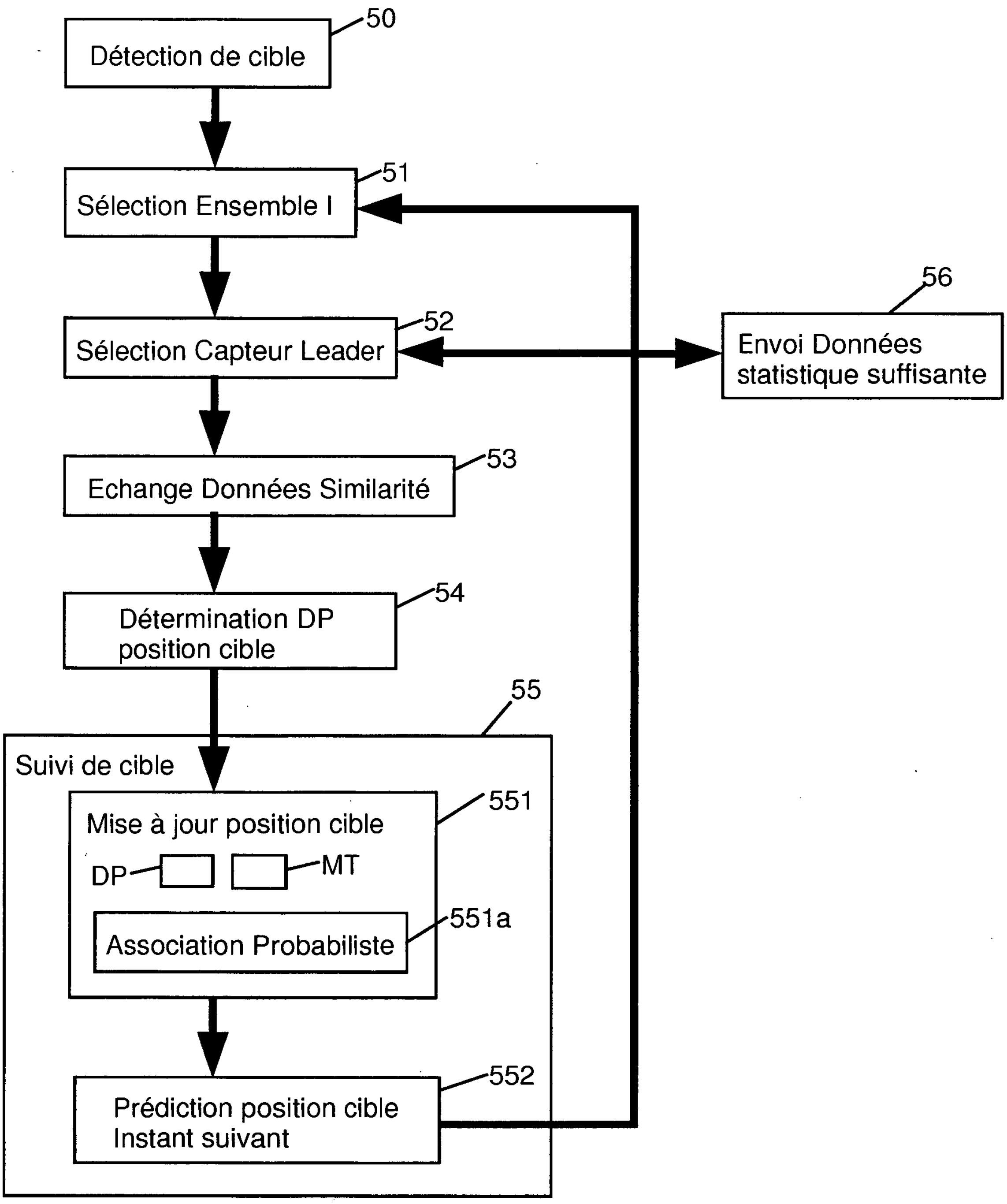
50
Détection de cible
51
Sélection Ensemble I
52
Sélection Capteur Leader
56
Envoi Données statistique suffisante
53
Echange Données Similarité
54
Détermination DP position cible
55
Suivi de cible
551
Mise à jour position cible
DP
MT
551a
Association Probabiliste
552
Prédiction position cible Instant suivant

FIGURE 3

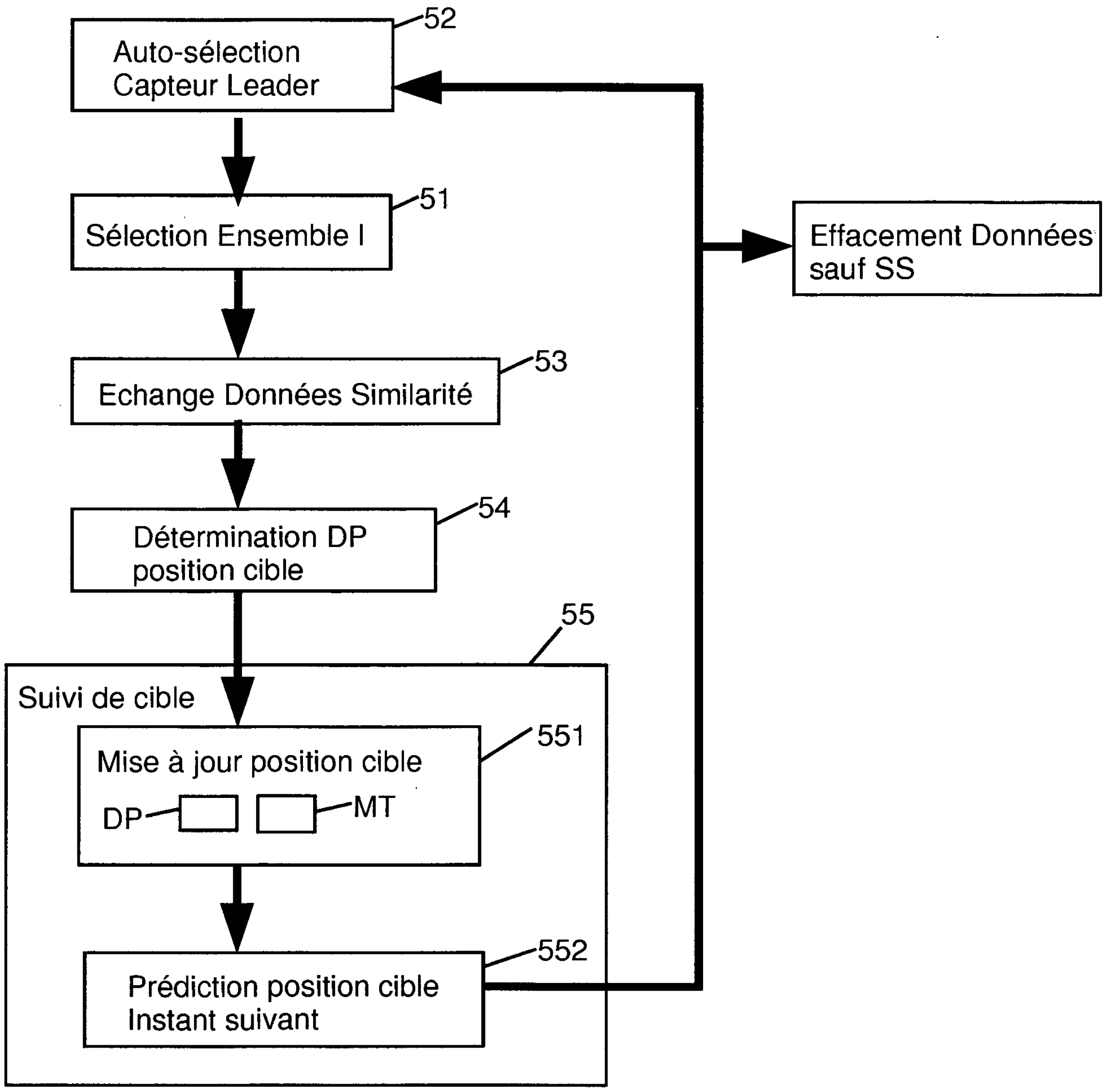
52
Auto-sélection
Capteur Leader
51
Sélection Ensemble I
Effacement Données
sauf SS
53
Echange Données Similarité
54
Détermination DP
position cible
55
Suivi de cible
551
Mise à jour position cible
DP
MT
552
Prédiction position cible
Instant suivant

FIGURE 4A

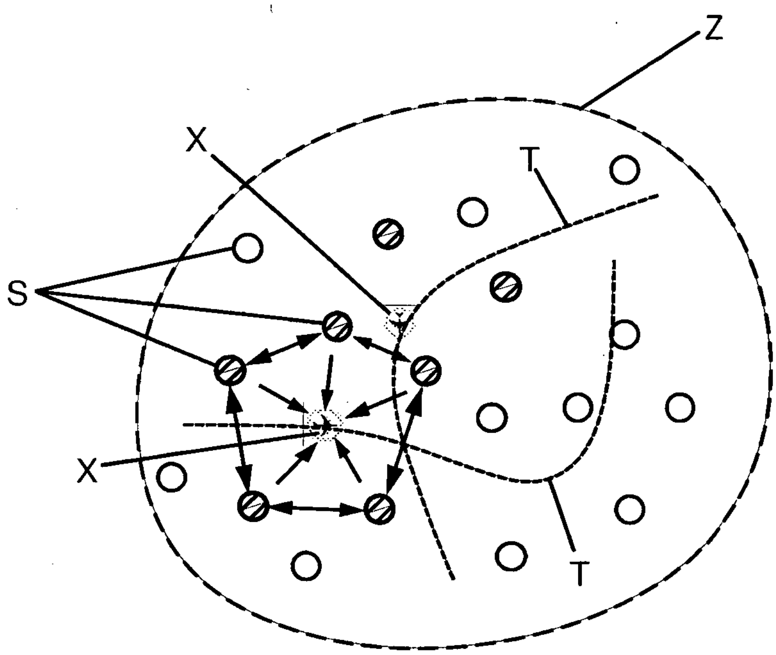


FIGURE 4B